(19)

Europäisches Patentamt
European Patent Office
Office européen des brevets

(11) **EP 4 422 314 A1**

(12) **EUROPEAN PATENT APPLICATION**
published in accordance with Art. 153(4) EPC

(43) Date of publication:
**28.08.2024 Bulletin 2024/35**

(21) Application number: **22885977.3**

(22) Date of filing: **25.10.2022**

(51) International Patent Classification (IPC):
**H04W 72/04** (2023.01)      **H04W 72/12** (2023.01)
**H04L 5/00** (2006.01)       **H04L 5/14** (2006.01)

(52) Cooperative Patent Classification (CPC):
**H04L 5/00; H04L 5/14; H04W 72/04; H04W 72/12;
H04W 72/1268; H04W 72/23; H04W 72/231**

(86) International application number:
**PCT/CN2022/127463**

(87) International publication number:
**WO 2023/072100 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.10.2021  CN 202111278290**

(71) Applicant: **Huawei Technologies Co., Ltd.
Shenzhen, Guangdong 518129 (CN)**

(72) Inventors:
• **LIU, Yunfeng
  Shenzhen, Guangdong 518129 (CN)**

• **GUO, Zhiheng
  Shenzhen, Guangdong 518129 (CN)**
• **MA, Ruixiang
  Shenzhen, Guangdong 518129 (CN)**
• **GAO, Xiang
  Shenzhen, Guangdong 518129 (CN)**
• **XIE, Xinqian
  Shenzhen, Guangdong 518129 (CN)**
• **SONG, Xinghua
  Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57)   This application provides a communication method and apparatus, to expand coverage of an uplink and reduce a delay. The communication method includes: obtaining first information, where the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource; and sending a signal and/or receiving a signal through the first frequency domain resource based on the first information.

FIG. 4

## Description

## CROSS-REFERENCE TO RELATED APPLICATIONS

This application claims priority to Chinese Patent Application No. 202111278290.2, filed with the China National Intellectual Property Administration on October 30, 2021 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

In a new radio (new radio, NR) wireless communication technology, a type of one symbol in a time division duplex (time division duplex, TDD) system is configured for an entire component carrier (component carrier, CC), to be specific, a type of one symbol in one CC can be configured as only one of uplink, downlink, and flexible.

In one CC, a time resource occupied by a downlink (downlink, DL) is usually greater than a time resource occupied by an uplink (uplink, UL). As a result, coverage of the DL and that of the UL are unbalanced, the coverage of the UL in the TDD system is poor, and a delay is long.

## SUMMARY

Embodiments of this application provide a communication method and apparatus, to expand coverage of an UL in a TDD system.

According to a first aspect, an embodiment of this application provides a communication method, including: obtaining first information, where the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource; and sending a signal and/or receiving a signal through the first frequency domain resource based on the first information.

In the foregoing design, different symbol types may be configured on different subbands. One CC applied to TDD can be used to increase configuration of uplink symbols by dividing and configuring subband-level symbol types. This expands coverage of an UL and reduces a delay for the UL.

In a possible design, the first frequency domain resource is a frequency domain resource occupied by one carrier.

In a possible design, the first information includes N indexes, one of the N indexes indicates a slot format corresponding to one of the M subbands in at least one slot in the first time domain resource, the slot format indicates a symbol type of each symbol in one slot, and N is a positive integer less than or equal to M; or the first information includes one index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M. In the foregoing design, a subband-level symbol type configuration is indicated, so that a terminal device distinguishes between subbands. This implements subband-level signal transmission.

In a possible design, the method is applied to a terminal device using a half-duplex communication mode, and the sending a signal and/or receiving a signal through the first frequency domain resource includes: if a reference subband is configured to receive or send a first signal on a second time domain resource, a first subband is configured to receive or send a second signal on the second time domain resource, and transmission directions of the first signal and the second signal are opposite, receiving or sending the first signal on the second time domain resource by using the reference subband, and skipping receiving or sending the second signal on the second time domain resource by using the first subband. In the foregoing design, when time domain resources for transmitting a plurality of signals overlap, the reference subband is introduced, and the terminal device using the half-duplex communication mode is configured to transmit a signal by using the reference subband, so that a communication exception caused by a signal transmission collision in this case can be avoided. This improves communication performance.

In a possible design, the reference subband is a subband with a smallest subband index in second subbands, the second subbands include the reference subband and the first subband, and any one of the second subbands is configured to send or receive a signal on the second time domain resource; or the reference subband is a predefined subband.

In a possible design, if the reference subband is configured in radio resource control (radio resource control, RRC) to receive the first signal on a third time domain resource, and the first subband is configured via RRC to send a sounding reference signal (sounding reference signal, SRS) on a fourth time domain resource, the SRS is not sent on the second time domain resource by using the first subband, where the second time domain resource is an overlapping part of the third time domain resource and the fourth time domain resource. In the foregoing design, when a time domain resource for sending the SRS overlaps a time domain resource for sending a signal by using the reference subband, only a part of the SRS in overlapping time domain may be discarded, to avoid interfering with SRS transmission in another time domain.

In a possible design, if the reference subband is configured via RRC to receive or send the first signal on a third time domain resource, and the first subband is configured via RRC to receive or send the second signal on a fourth time domain resource, the second signal is not received or sent on the third time domain resource by using the first subband, where the second time domain resource is an overlapping part of the third time domain resource and the fourth time domain resource. In the foregoing design, when a time domain resource for transmitting a signal (optionally, except the SRS) overlaps a time domain resource for transmitting a signal whose transmission direction is opposite to that of the signal by using the reference subband, all transmitted signals may be discarded, to ensure normal communication.

In a possible design, a physical random access channel (physical random access channel, PRACH) signal is sent on a first time-frequency resource, where the first time-frequency resource is a time-frequency resource in which one or more valid PRACH occasions are located, a frequency domain resource corresponding to the first time-frequency resource overlaps the at least two subbands in the first frequency domain resource, and symbol types corresponding to some or all of the at least two subbands on at least one symbol in a fifth time domain resource are downlink, and the fifth time domain resource includes a symbol occupied by the first time-frequency resource and $N_{gap}$ symbols before the first time-frequency resource, where $N_{gap}$ is an integer greater than or equal to 0. In the foregoing design, when a downlink symbol exists in symbols occupied for transmitting the PRACH signal, the PRACH signal is still transmitted. That is, for preferential transmission of a special signal, a configuration of a symbol type may not be considered.

In a possible design, the sending a signal and/or receiving a signal through the first frequency domain resource includes: receiving a synchronization signal block (synchronization signal/physical broadcast channel block, SSB) or a type-0 physical downlink control channel (physical downlink control channel, PDCCH) signal on a first time-frequency resource, where a frequency domain resource corresponding to the first time-frequency resource overlaps the at least two subbands in the first frequency domain resource, and symbol types corresponding to some or all of the at least two subbands on at least one symbol in a fifth time domain resource are uplink symbols, and the fifth time domain resource includes a symbol occupied by the first time-frequency resource. In the foregoing design, when an uplink symbol exists in symbols occupied for transmitting the SSBI or the type-0 PDCCH signal, the SSB or the type-0 PDCCH signal is still transmitted. That is, for preferential transmission of a special signal, a configuration of a symbol type may not be considered.

According to a second aspect, an embodiment of this application provides a communication method, including: generating first information, where the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource; and sending the first information.

In the foregoing design, different symbol types may be configured on different subbands. One CC applied to TDD can be used to increase configuration of uplink symbols by dividing and configuring subband-level symbol types. This expands coverage of an UL and reduces a delay for the UL.

In a possible design, the first information includes N indexes, one of the N indexes indicates a slot format corresponding to one of the M subbands in at least one slot in the first time domain resource, the slot format indicates a symbol type of each symbol in one slot, and N is a positive integer less than or equal to M; or the first information includes one index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M.

According to a third aspect, an embodiment of this application provides a communication apparatus. The communication apparatus may be a terminal device, may be an apparatus in a terminal device, or may be an apparatus that can be used together with a terminal device. In a design, the communication apparatus may include modules for performing the method/operations/steps/actions described in the first aspect. The modules may be hardware circuits, may be software, or may be implemented by using a combination of a hardware circuit and software. In a design, the communication apparatus may include a processing module and a communication module. An example is as follows:

The communication module is configured to obtain first information, where the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource.

The processing module is configured to send a signal and/or receive a signal through the first frequency domain resource based on the first information.

In a possible design, the first information includes N indexes, one of the N indexes indicates a slot format corresponding to one of the M subbands in at least one slot in the first time domain resource, the slot format indicates a symbol type of each symbol in one slot, and N is a positive integer less than or equal to M; or the first information includes one index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M.

In a possible design, the communication apparatus in the third aspect is used in a terminal device using a half-duplex communication mode, and the communication module is further configured to: if a reference subband is configured to receive or send a first signal on a second time domain resource, a first subband is configured to receive or send a second signal on the second time domain resource, and transmission directions of the first signal and the second signal are opposite, receive or send the first signal on the second time domain resource by using the reference subband, and skip receiving or sending the second signal on the second time domain resource by using the first subband.

In a possible design, the reference subband is a subband with a smallest subband index in second subbands, the second subbands include the reference subband and the first subband, and any one of the second subbands is configured to send or receive a signal on the second time domain resource; or the reference subband is a predefined subband.

In a possible design, the communication module is further configured to: if the reference subband is configured via RRC on a third time domain resource to receive the first signal, and the first subband is configured via RRC on a fourth time domain resource to send an SRS, not send the SRS on the second time domain resource by using the first subband, where the second time domain resource is an overlapping part of the third time domain resource and the fourth time domain resource.

In a possible design, the communication module is further configured to: if the reference subband is configured via RRC on a third time domain resource to receive or send the first signal, and the first subband is configured via RRC, on a fourth time domain resource to receive or send the second signal, not receive or send the second signal by using the first subband on the third time domain resource, where the second time domain resource is an overlapping part of the third time domain resource and the fourth time domain resource.

In a possible design, the communication module is further configured to: send a PRACH signal on a first time-frequency resource, where the first time-frequency resource is a time-frequency resource in which one or more valid PRACH occasions are located, a frequency domain resource corresponding to the first time-frequency resource overlaps the at least two subbands in the first frequency domain resource, and symbol types corresponding to some or all of the at least two subbands on at least one symbol in a fifth time domain resource are downlink, and the fifth time domain resource includes a symbol occupied by the first time-frequency resource and $N_{gap}$ symbols before the first time-frequency resource, where $N_{gap}$ is an integer greater than or equal to 0.

In a possible design, the communication module is further configured to:

receive an SSB or a type-0 PDCCH signal on a first time-frequency resource, where a frequency domain resource corresponding to the first time-frequency resource overlaps the at least two subbands in the first frequency domain resource, symbol types corresponding to some or all of the at least two subbands on at least one symbol in a fifth time domain resource are uplink symbols, and the fifth time domain resource includes a symbol occupied by the first time-frequency resource.

According to a fourth aspect, an embodiment of this application provides a communication apparatus. The communication apparatus may be an access network device, an apparatus in an access network device, or an apparatus that can be used together with an access network device. In a design, the apparatus may include modules that one-to-one correspond to the method/operation/step/action described in the second aspect. The modules may be implemented by a hardware circuit, software, or a combination of the hardware circuit and software. In a design, the communication apparatus may include a processing module and a communication module. For example,

the processing module is configured to generate first information, where the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource; and the communication module is configured to send the first information.

In a possible design, the first information includes N indexes, one of the N indexes indicates a slot format corresponding to one of the M subbands in at least one slot in the first time domain resource, the slot format indicates a symbol type of each symbol in one slot, and N is a positive integer less than or equal to M; or the first information includes one index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M.

According to a fifth aspect, an embodiment of this application provides a communication apparatus. The communication apparatus includes a processor, configured to implement the method described in the first aspect. The communication apparatus may further include a memory, configured to store instructions and data. The memory is coupled to the processor, and when executing the instructions stored in the memory, the processor can implement the method described in the first aspect. The communication apparatus may further include a communication interface. The communication interface is used by the apparatus to communicate with another device. For example, the communication interface may be a transceiver, a circuit, a bus, a module, or another type of communication interface, and the another device may be an access network device. In a possible device, the communication apparatus includes:

a memory, configured to store program instructions; and
a processor, configured to obtain first information by using a communication interface, where the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource, where
the processor is further configured to send a signal and/or receive a signal through the first frequency domain resource based on the first information.

According to a sixth aspect, an embodiment of this application provides a communication apparatus. The communication apparatus includes a processor, configured to implement the method according to the second aspect. The communication apparatus may further include a memory, configured to store instructions and data. The memory is coupled to the processor. When executing the instructions stored in the memory, the processor can implement the method described in the second aspect. The communication apparatus may further include a communication interface. The communication interface is used by the apparatus to communicate with another device. For example, the communication interface may be a transceiver, a circuit, a bus, a module, or another type of communication interface, and the another device may be a terminal device. In a possible device, the communication apparatus includes:

a memory, configured to store program instructions; and
a processor, configured to generate first information, where the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource, where the processor is further configured to send the first information by using the communication interface.

According to a seventh aspect, an embodiment of this application provides a communication system, including the communication apparatus according to any one of the third aspect or the possible designs of the third aspect, one of the communication apparatuses according to the fifth aspect, and the communication apparatus according to any one of the fourth aspect or the possible designs of the fourth aspect, and one of the communication apparatuses according to the sixth aspect.

According to an eighth aspect, an embodiment of this application further provides a computer program. When the computer program is run on a computer, the computer is enabled to perform the method provided in any one of the first aspect or the second aspect.

According to a ninth aspect, an embodiment of this application further provides a computer program product, including instructions. When the instructions are run on a computer, the computer is enabled to perform the method provided in any one of the first aspect or the second aspect.

According to a tenth aspect, an embodiment of this application further provides a computer-readable storage medium, where the computer-readable storage medium stores a computer program or instructions, and when the computer program or the instructions is/are run on a computer, the computer is enabled to perform the method provided in the first aspect or the second aspect.

According to an eleventh aspect, an embodiment of this application further provides a chip. The chip is configured to read a computer program stored in a memory, to perform the method provided in the first aspect or the second aspect.

According to a twelfth aspect, an embodiment of this application further provides a chip system. The chip system includes a processor, configured to support a computer apparatus in implementing the method provided in the first aspect or the second aspect. In a possible design, the chip system further includes a memory, and the memory is configured to store a program and data that are necessary for the computer apparatus. The chip system may include a chip, or may include a chip and another discrete device.

## BRIEF DESCRIPTION OF DRAWINGS

FIG. 1 is a schematic diagram of a structure of a communication system according to an embodiment of this application;

FIG. 2A is a schematic diagram of a single-periodicity configuration of TDD-ConfigCommon;

FIG. 2B is a schematic diagram of a dual-periodicity configuration of TDD-ConfigCommon;

FIG. 2C is a schematic diagram of a slot format configuration in a conventional technology;

FIG. 3 is a schematic diagram of a symbol type configuration of a CC;

FIG. 4 is a schematic flowchart of a communication method according to an embodiment of this application;

FIG. 5A is a schematic diagram of a frequency domain range of a subband according to an embodiment of this application;

FIG. 5B is a schematic diagram of a frequency domain range of a subband according to an embodiment of this application;

FIG. 6A is a schematic diagram of a slot format configuration according to an embodiment of this application;

FIG. 6B is a schematic diagram of a subband-level slot format configuration according to an embodiment of this application;

FIG. 7 is a schematic diagram of a symbol type configuration according to an embodiment of this application;

FIG. 8A is a schematic diagram of a signal transmission configuration according to an embodiment of this application;

FIG. 8B is a schematic diagram of a signal transmission configuration according to an embodiment of this application;

FIG. 8C is a schematic diagram of a signal transmission configuration according to an embodiment of this application;

FIG. 8D is a schematic diagram of a signal transmission configuration according to an embodiment of this application;

FIG. 8E is a schematic diagram of a signal transmission configuration according to an embodiment of this application;

FIG. 9A is a schematic diagram of a signal transmission configuration according to an embodiment of this application;

FIG. 9B is a schematic diagram of a signal transmission configuration according to an embodiment of this application;

FIG. 9C is a schematic diagram of a signal transmission configuration according to an embodiment of this application;

FIG. 10 is a schematic diagram of a signal transmission configuration according to an embodiment of this application;

FIG. 11 is a schematic diagram of a structure of a communication apparatus according to an embodiment of this application; and

FIG. 12 is a schematic diagram of a structure of a communication apparatus according to an embodiment of this application.

## DESCRIPTION OF EMBODIMENTS

The following describes in detail embodiments of this application with reference to accompanying drawings.

In embodiments of this application, for example, "at least one" in the following, indicates one or more. "A plurality of" refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as "first" and "second" may be used in embodiments of this application to describe objects, these objects should not be limited by these terms. These terms are only used to distinguish the objects from each other.

Terms "including", "having", and any other variant thereof mentioned in the following descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in embodiments of this application, the term "example" or "for example" is used to represent giving an example, an illustration, or a description. Any method or design scheme described as an "example" or "for example" in embodiments of this application should not be explained as being more preferred or having more advantages than another method or design scheme. Exactly, use of the term "example", "for example", or the like is intended to present a related concept in a specific manner.

The technologies provided in embodiments of this application may be applied to various communication systems. For example, the communication system may be a 4th generation (4th generation, 4G) communication system (for example, a long term evolution (long term evolution, LTE) system or an LTE-A system), a 5th generation (5th generation, 5G) communication system, a Worldwide Interoperability for Microwave Access (Worldwide Interoperability for Microwave Access, WiMAX) or a wireless local area network (wireless local area network, WLAN) system, a converged system of a plurality of systems, or a future communication system, for example, a 6G communication system. The 5G communication system may also be referred to as an NR system.

A network element in a communication system may send a signal to another network element or receive a signal from another network element. The signal may include information, configuration information, data, or the like. For example, the communication system may include at least one terminal device and at least one access network device. A sending network element of the configuration information may be an access network device, and a receiving network element of the configuration information may be a terminal device. In addition, it may be understood that, if the communication system includes a plurality of terminal devices, the plurality of terminal devices may also send signals to each other, that is, both a sending network element of the configuration information and a receiving network element of the configuration information may be terminal devices.

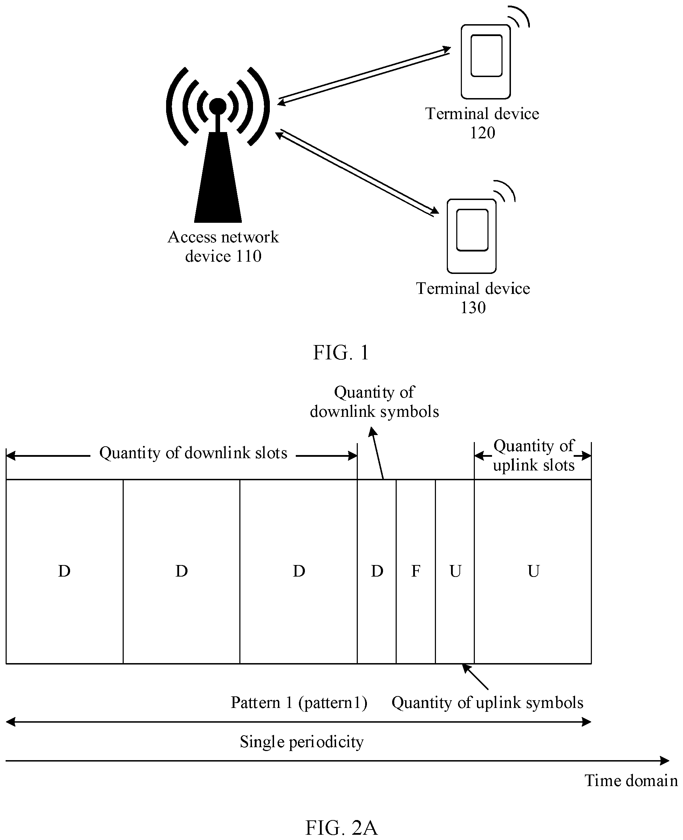

FIG. 1 shows a communication system. For example, the communication system includes an access network device 110 and two terminal devices, namely, a terminal device 120 and a terminal device 130. At least one of the terminal device 120 and the terminal device 130 may send an uplink signal to the access network device, and the access network device may receive the uplink signal. The access network device may send a downlink signal to the at least one of the terminal device 120 and the terminal device 130.

The following describes in detail the terminal device and the access network device in FIG. 1.

The terminal device is also referred to as a terminal, user equipment (user equipment, UE), a mobile station (mobile station, MS), a mobile termination (mobile termination, MT), or the like, and is a device that provides voice and/or data connectivity for a user. For example, the terminal device includes a handheld device, a vehicle-mounted device, a wearable device, a computing device, or the like that has a wireless connection function. For example, examples of some terminals are: a wireless network camera, a mobile phone (mobile phone), a tablet computer, a computer that supports a wireless transceiver function, such as a notebook computer or a palmtop computer, a mobile Internet device (mobile Internet device, MID), a smartwatch, and a virtual reality (virtual reality, VR) device, an augmented reality (augmented reality, AR) device, a wireless terminal in industrial control (industrial control), a terminal in an Internet of Vehicles system, a wireless terminal in self driving (self driving), a wireless terminal in telemedicine, a wireless terminal in a smart grid (smart grid), a wireless terminal in transportation safety (transportation safety), a wireless terminal in a smart city (smart city), for example, a smart tanker, a terminal device on a high-speed railway, and a wireless terminal in a smart home (smart home), for example, a smart speaker, a smart coffee machine, or a smart printer.

In embodiments of this application, the communication apparatus configured to implement a function of the terminal device may be a terminal device, or may be a terminal device that has some functions of a terminal, or may be an apparatus that can support the terminal device in implementing the function, for example, a chip system. The apparatus may be installed in the terminal device. In this embodiment of this application, the chip system may include a chip, or may include a chip and another discrete device. In the technical solutions provided in embodiments of this application, an example in which the communication apparatus configured to implement the function of the terminal device is the terminal device or UE is used for description.

The access network device may be a base station (base station, BS), and the access network device may also be referred to as a network device, an access node (access node, AN), or a radio access node (radio access node, RAN). The access network device may provide a wireless access service for the terminal device. For example, the access network device includes but is not limited to: a base station, a generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), a transmitting and receiving point (transmitting and receiving point, TRP), a transmitting point (transmitting point, TP), and/or a mobile switching center. Alternatively, the access network device may be a central unit (central unit, CU), a distributed unit (distributed unit, DU), a central unit control plane (CU control plane, CU-CP) node, or a central unit user plane (CU user plane, CU-UP) node. Alternatively, the access network device may be a macro base station, a micro base station, a relay station, an access point, a vehicle-mounted device, a wearable device, an access network device in a future evolved public land mobile network (public land mobile network, PLMN), or the like.

In embodiments of this application, a communication apparatus configured to implement a function of the access network device may be an access network device, or may be a network device having some functions of the access network device, or may be an apparatus that can support the access network device in implementing the function, for example, a chip system, a hardware circuit, a software module, or a hardware circuit and a software module. The apparatus may be installed in the access network device. In the method in this embodiment of this application, an example in which the communication apparatus configured to implement the function of the access network device is the access network device is used for description.

Embodiments of this application mainly relate to a configuration of a symbol type on a time domain resource. The following first describes some terms.

(1) A resource includes a time domain resource and a frequency domain resource, and may be considered as a resource pair including the time domain resource and the frequency domain resource. The time domain resource means a resource occupied in time domain, for example, an orthogonal frequency division modulation (orthogonal frequency division modulation, OFDM) symbol (referred to as a symbol for short in this specification). A minimum granularity of the time domain resource is not limited in embodiments of this application. For example, a minimum granularity of the time domain resource is one OFDM symbol, or may be a mini-slot (mini-slot), a slot (slot), or the like. One mini-slot may include a plurality of OFDM symbols, and "a plurality of" herein may be two or more. One slot may include 14 OFDM symbols or 12 OFDM symbols.

The frequency domain resource is a resource occupied in frequency domain, or is referred to as a frequency resource. A minimum granularity of the frequency domain resource may be one subcarrier, or may be a physical resource block (physical resource block, PRB), a resource block group (resource block group, RBG), or the like. One PRB includes 12 subcarriers in frequency domain, and one RBG may include two PRBs, four PRBs, eight PRBs, or 16 PRBs.

(2) The symbol type is uplink, downlink, or flexible, and the symbol type may also be understood as a direction of a symbol. When a direction of a symbol is uplink, it indicates that an uplink signal may be transmitted on the symbol. The uplink signal is a signal whose transmission direction is uplink, for example, may be a signal sent by a terminal device to an access network device. When a direction of a symbol is downlink, it indicates that a downlink signal may be transmitted on the symbol. The downlink signal is a signal whose transmission direction is downlink, for example, may be a signal sent by an access network device to a terminal device. When a direction of a symbol is flexible, it indicates that a transmission direction of a signal corresponding to the symbol is not determined. In this case, with reference to a related definition or configuration, a flexible symbol may be used for uplink signal transmission, or may be used for downlink signal transmission. This is not limited in embodiments of this application.

(3) A CC indicates a segment of consecutive frequency domain resources, and may correspond to a cell configuration.

(4) For a subband, it is designed that a frequency domain resource occupied by one subband may be less than a frequency domain resource occupied by one CC, and frequency domain resources of different subbands do not overlap. A plurality of subbands may be consecutive or inconsecutive in frequency domain. For example, a design in which a plurality of subbands are inconsecutive in subbands may be that there is a guard interval between every two of the plurality of subbands. Similarly, a design in which a plurality of subbands are consecutive in frequency domain may be that there is no guard interval between every two of the plurality of subbands.

Second, a conventional technology about some symbol type configurations is described. In the conventional technology, a configuration of a symbol type is mainly performed for one CC, that is, only one symbol type is configured for one symbol in one CC in a conventional TDD system. The following specifically describes a manner of configuring a symbol type in the conventional technology with reference to a related manner 1 and a related manner 2.

Related manner 1: In a higher layer configuration solution, the access network device notifies the terminal device through RRC signaling, to implement a configuration of a symbol direction in a specific periodicity. A higher layer configuration solution for one CC may be further classified into a cell-level TDD configuration (denoted as TDD-Config-Common) and a terminal device-level TDD configuration (denoted as TDD-ConfigDedicated).

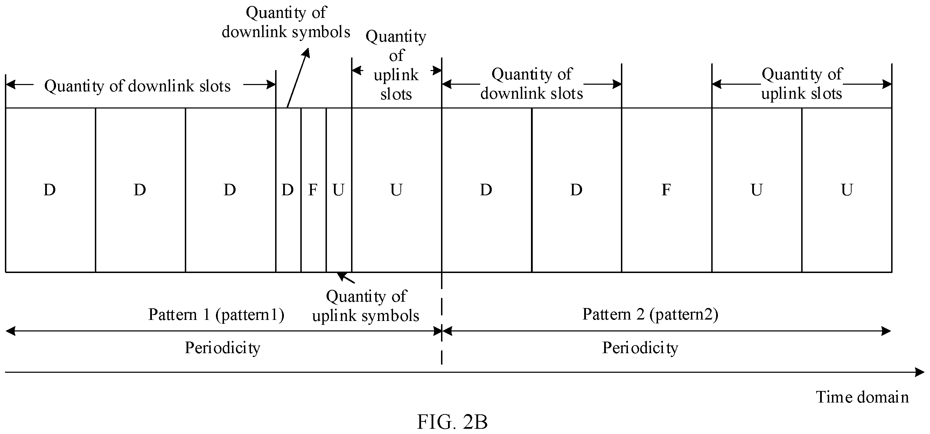

TDD-ConfigCommon includes the following information: a periodicity of TDD-ConfigCommon, a quantity of downlink slots in a periodicity, a quantity of uplink slots in a periodicity, a quantity of downlink symbols in a periodicity, and a quantity of uplink symbols in a periodicity. For example, FIG. 2A is a schematic diagram of a single-periodicity configuration of TDD-ConfigCommon. In FIG. 2A, D is downlink (downlink), F is flexible (flexible), and U is uplink (uplink). A slot length is 1 ms, and a single periodicity, that is, a periodicity of pattern 1 (pattern1) is 5 ms. In the periodicity, a quantity of downlink slots is 3, a quantity of uplink slots is 1, a quantity of downlink symbols is 5, and a quantity of uplink symbols is 5. The remaining part that is not configured with a direction is flexible. Based on the foregoing configuration, it may be determined that symbol types of all symbols in a periodicity are one of downlink, flexible, and uplink. For example, FIG. 2B is a schematic diagram of a dual-periodicity configuration of TDD-ConfigCommon. In FIG. 2B, D is downlink (downlink), F is flexible (flexible), and U is uplink (uplink). A length of a slot is 1 ms, a periodicity of a pattern 1 (pattern1) is 5 ms, a quantity of downlink slots in the periodicity is 3, a quantity of uplink slots is 1, a quantity of downlink symbols is 5, a quantity of uplink symbols is 5, and a remaining part that is not configured with a direction is flexible. A periodicity of pattern 2 (pattern2) is 5 ms, a quantity of downlink slots in the periodicity is 2, a quantity of uplink slots is 2, a quantity of downlink symbols is 0, a quantity of uplink symbols is 0, and some remaining symbols that are configured with directions are flexible.

TDD-ConfigDedicated may be separately configured for the terminal device, and a symbol type of a flexible symbol in TDD-ConfigCommon may be changed to uplink or downlink based on TDD-ConfigCommon. TDD-ConfigDedicated may be configured for a symbol type of a symbol in a slot in TDD-ConfigCommon. TDD-ConfigDedicated mainly includes an identifier (such as an ID) of the slot, and a quantity of uplink symbols and/or a quantity of downlink symbols of the slot.

Related manner 2: Based on the TDD-ConfigCommon and/or TDD-ConfigDedicated configuration, a symbol type of a flexible symbol in the TDD-ConfigCommon and/or TDD-ConfigDedicated configuration is modified by using a slot format indicator (slot format indicator, SFI) index carried in downlink control information (downlink control indicator, DCI)2-0. In the following, the symbol type is modified by using an SFI index for short. Specifically, after the TDD-ConfigCommon or TDD-ConfigDedicated configuration for the CC, the access network device may modify, by using the SFI index, a symbol type of each symbol in a slot including a flexible symbol, for the slot including the flexible symbol. Generally, the SFI index indicates a slot format combination (SlotFormatCombination). For example, the SFI index corresponds to a slot format combination identifier (slotFormatCombinationId) whose value is the same as that of the SFI index. The slot format combination identifier corresponds to a plurality of slot formats, and may be used to configure a symbol type of each symbol in a plurality of slots in the CC. The symbol type configured for the slot format may be specifically determined according to the slot format table shown in the following Table 1.

**Table 1**

| Format index | Number of a symbol in a slot (slot format) | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| ... | | | | | | | | | | | | | | |
| 32 | D | D | D | D | D | D | D | D | D | D | F | F | U | U |

Specifically, the access network device configures the slot format combination table for the terminal device through RRC. The slot format combination table includes two columns. The first column indicates a combination index (or referred to as a slot format combination index, a slot format combination identifier, a table index, or the like), and the second column indicates a plurality of slot format (slot formats) indexes corresponding to a slot format combination identifier. The slot format combination table may include one or more rows, and a slot format combination identifier in each row may indicate a plurality of slot formats in the row. One slot format corresponds to a slot format indicated by one format index in Table 1, and the slot format is used to configure a symbol type of each symbol in one slot.

In the related manner 2, the SFI index corresponds to a slot format combination identifier (slotFormatCombinationId) whose value is the same as a value of the SFI index, so that the terminal device may modify a symbol type of each symbol in the plurality of slots based on a plurality of slot format indexes corresponding to the slot format combination identifier in the slot format combination table configured through RRC. It may also be understood that the slot format combination identifier is carried in the SFI index. Specifically, a manner of obtaining the SFI index is as follows: When obtaining the DCI2-0, the terminal device may determine a start position of the SFI index in the DCI2-0 based on a parameter positionInDCI in an information element SlotFormatCombinationsPerCell previously configured by the access network device through RRC, where the SFI index is determined by using k bits, and the k bits indicate a field length occupied by the SFI index in the DCI2-0. It may be understood that the SFI index is determined based on a value of the field. A value of k may be determined based on a maximum value of a parameter slotFormatCombinationId in the information element SlotFormatCombinationsPerCell, $k = \max \{ \lceil log_2(maxSFIindex+1) \rceil, 1 \}$, where maxSFIin-dex is the maximum value of the parameter slotFormatCombinationId configured via RRC; $\lceil a \rceil$ indicates an integer obtained after rounding up a, and is a minimum integer greater than a; and max {c, d} indicates a maximum value in c and d. It should be noted that a, c, and d herein indicate variables and have no actual meaning. For a specific determining manner, refer to content in clause 11.1.1 in the 3GPP protocol 38.213 version g60.

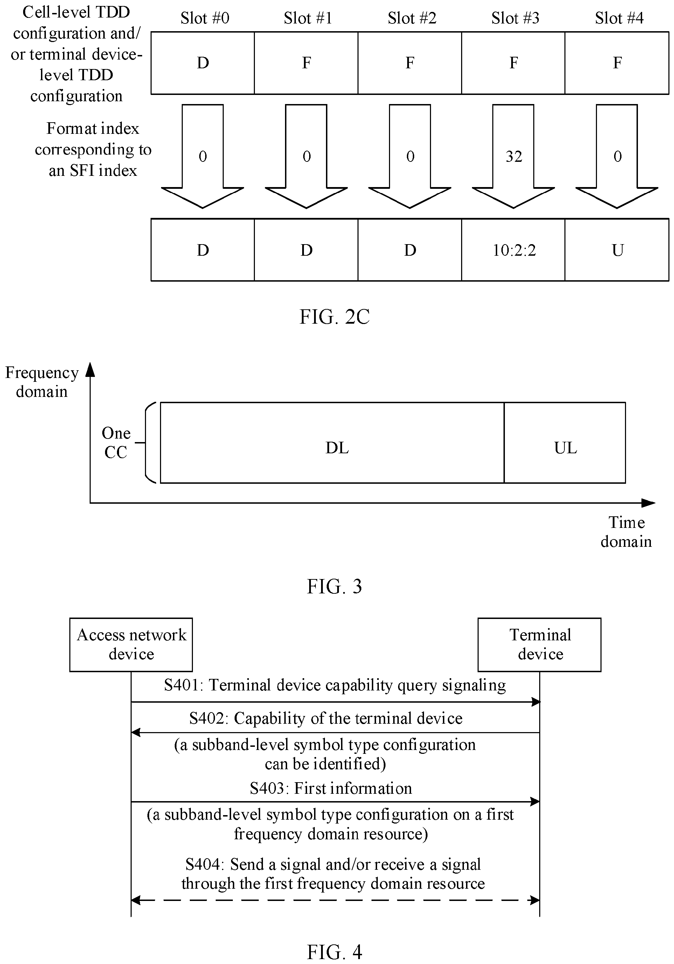

For example, FIG. 2C is a schematic diagram of a slot format configuration. A slot format combination identifier carried in an SFI index is 0, and format indexes of five slot formats corresponding to the slot format combination identifier in Table 1 are separately 0, 0, 0, 32, and 1. It is assumed that five slots (denoted as a slot #0 to a slot #4) after the slot in which the SFI index is located are configured as one downlink slot and four slots including flexible symbols based on TDD-ConfigCommon or TDD-ConfigDedicated. After the modification based on the SFI index, a symbol in the slot #0 is still a downlink symbol, symbols in the slot #1 and the slot #2 are all configured as downlink symbols based on the format index 0 corresponding to the SFI index, 10 downlink symbols, two flexible symbols, and two uplink symbols are configured in the slot #3 based on the format index 32 corresponding to the SFI index, and symbols in the slot #4 are all configured as uplink symbols based on the format index 1 corresponding to the SFI index.

A configuration of the symbol type is performed according to a related manner 1 or a related manner 2. In a CC in a conventional TTD system, a time resource occupied by a DL is usually greater than a time resource occupied by an UL, as shown in FIG. 3. Therefore, uplink coverage in the TDD system is poor, and a delay is long.

Based on this, an embodiment of this application provides a communication method, mainly related to configurations of symbol types of a plurality of subbands in a same time range. Applied to the TDD system, a plurality of subbands may be divided in one CC, and different subbands may be configured to correspond to different symbol types on a same symbol. In other words, in this embodiment of this application, a plurality of types may be configured on one symbol in one CC. In this manner, a time resource occupied by an UL in one CC can be increased. This expands coverage of the UL and reduces delay for the UL. The following further describes the solutions provided in embodiments of this application in detail.

In the following embodiments of this application, "at least one" may be described as one or more, and "a plurality of" may be two, three, four, or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as "first" and "second" may be used in embodiments of this application to describe objects, these objects should not be limited by these terms. These terms are only used to distinguish objects from each other, and this is not limited in this application.

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in embodiments of this application, the term "example" or "for example" is used to represent giving an example, an illustration, or a description. Any embodiment or design scheme described as "example" or "for example" in embodiments of this application should not be explained as being more preferred or having more advantages than another embodiment or design scheme. Exactly, use of the term "example", "for example", or the like is intended to present a related concept in a specific manner.

FIG. 4 shows a communication method. The method mainly includes the following steps.

S401: An access network device sends terminal device capability query signaling to a terminal device, where the terminal device capability query signaling is used to request a capability of the terminal device.

S402: The terminal device reports the capability of the terminal device to the access network device. If the capability includes a capability of identifying a subband-level symbol type configuration, the terminal device may determine the subband-level symbol type configuration based on a solution described in S403. If the capability does not include the capability of identifying a subband-level symbol type configuration, the terminal device may determine a symbol type configuration in one CC based on the solution described in Manner 1 and/or Manner 2.

Optionally, for differentiation, a terminal device having the capability of identifying the subband-level symbol type configuration may be referred to as a new (new) terminal device, and a terminal device not having the capability of identifying the subband-level symbol type configuration may be referred to as a legacy (legacy) terminal device.

S403: The terminal device obtains first information from the access network device, for example, the access network device sends the first information to the terminal device.

The first information is used to determine a symbol type corresponding to at least one of M subbands on a symbol in a first time domain resource. Specifically, the first information may include the subband-level symbol type configuration. For example, the first information may include symbol type configurations corresponding to N subbands in the M subbands, where M is a positive integer, N is a positive integer less than or equal to M, and numbers of the N subbands in the M subbands may be consecutive or inconsecutive. For example, M is 3, and N is 2. In this case, the N subbands may include a 1st subband and a 2nd subband in the M (3) subbands. Alternatively, the N subbands may include a 1st subband and a 3rd subband in M (3). A symbol type configuration corresponding to one subband may be used to configure a symbol type corresponding to the subband on a part or all of symbols of the first time domain resource. The terminal device may determine, based on the first information, the symbol type corresponding to the at least one of the M subbands on the symbol in the first time domain resource. The terminal device has the capability of identifying the subband-level symbol type configuration. In addition, if the first frequency domain resource corresponds to a frequency domain resource occupied by one CC in a TDD system, a symbol type, on the symbol in the first time domain resource, corresponding to a subband other than the at least one subband on the first frequency domain resource may be determined based on TDD-ConfigCommon of the CC.

The M subbands are located in the first frequency domain resource. The M subbands include all or a part of subbands in the first time-frequency resource. Alternatively, it may be understood that the first frequency domain resource may be divided into M or more subbands. At least two subbands in the first frequency domain resource correspond to different symbol types on a same symbol in the first time domain resource. In this embodiment of this application, an example in which the first frequency domain resource may be divided into the M subbands is mainly used for description. It should be noted that a frequency domain resource (for example, the first frequency domain resource) in this embodiment of this application may be in a unit of a resource block (resource block, RB), and a time domain resource (for example, the first time domain resource) may be in a unit of a slot or a symbol. For example, the first frequency domain resource may include at least one RB, and the first time domain resource may include at least one slot or at least one symbol. Certainly, other units may alternatively be used for the frequency domain resource and the time domain resource. Units of the time domain resource and the frequency domain resource are not limited in embodiments of this application. Optionally, sizes of the first frequency domain resource and the first time domain resource may be preset. For example, the first frequency domain resource may correspond to a frequency domain resource occupied by one CC in the TDD system, and the first time domain resource may correspond to a time domain resource occupied by one CC in the TDD system.

Specifically, for frequency domain ranges of the M subbands or positions of the M subbands in the first frequency domain resource, refer to the following descriptions for understanding. For example, a frequency domain range of each of the M subbands may be preset. The access network device may send the first information including an identifier (for example, a subband number) of the at least one of the M subbands, and the terminal device may determine a frequency domain range of the at least one of the M subbands. Alternatively, the access network device may indicate a frequency domain range of the at least one of the M subbands based on the first information, and the terminal device determines the frequency domain range of each of the M subbands based on the first information. Alternatively, the access network device may independently indicate a frequency domain range of the at least one of the M subbands based on other information (for example, denoted as second information or a higher layer configuration), and the terminal device determines the frequency domain range of each of the M subbands based on the other information.

Optionally, there is a guard interval between every two of the M subbands. Alternatively, optionally, there is no guard interval between every two of the M subbands, in other words, the M subbands are consecutive on the first frequency domain resource. The following uses an example in which the frequency domain range of the at least one of the M subbands is indicated based on the first information for description.

In a design in which there is the guard interval between every two of the M subbands, a solution in which the first information indicates the frequency domain range of the at least one of the M subbands may be implemented with reference to any one of following Examples A1 to A3.

In Example A1, the first information may include first frequency domain range information of the guard interval between every two of the M subbands. The first frequency domain range information may include at least two of a start resource block RB index, a quantity of RBs, and an end RB index. For example, when M is 3, and the first frequency domain resource corresponds to a frequency domain resource of one CC, the first information may include first frequency domain range information of a guard interval 1 between the 1st subband and the 2nd subband, and first frequency domain range information of a guard interval 2 between the 2nd subband and the 3rd subband. For example, the frequency domain resource of the CC includes 130 RBs, which are denoted as an RB 0 to an RB 129. If the first frequency domain range information includes the start RB index and the quantity of RBs, and the first information specifically includes {{45, 5}{80, 5}}, the terminal device may determine that a frequency domain range of the 1st subband is the RB 0 to the RB 44, a frequency domain range of the guard interval 1 is the RB 45 to the RB 49, a frequency domain range of the 2nd subband is the RB 50 to the RB 79, a frequency domain range of the guard interval 2 is the RB 80 to the RB 84, and a frequency domain range of the 3rd subband is the RB 85 to the RB 129.

In Example A2, the first information may include second frequency domain range information of each of the M subbands. The second frequency domain range information may include at least one of a start resource block RB index, a quantity of RBs, and an end RB index. For example, when M is 3, and the first frequency domain resource corresponds to a frequency domain resource of one CC, the first information may include a quantity of RBs or an end RB index of the 1st subband, at least two of a start resource block RB index, a quantity of RBs, and an end RB index of the 2nd subband, and a start RB index or a quantity of RBs of the 3rd subband. If the first information includes the start positions and the quantities of RBs, when the first information specifically includes {{45}, {50, 30}, and {45}}, it may indicate that the quantity of RBs of the 1st subband is 45, the start RB index of the 2nd subband is 50, and the quantity of RBs of the 2nd subband is 30, and the quantity of RBs of the 3rd subband is 45. When the frequency domain resource of the CC corresponding to the first frequency domain resource includes 130 RBs, which are denoted as an RB 0 to an RB 129, {{45}, {50, 30}, and {45}} may also be understood as {{0, 45}, {50, 30}, {85, 45}}. In this case, the terminal device may determine that a frequency domain range of the 1st subband is the RB 0 to the RB 44, a frequency domain range of the guard interval 1 is the RB 45 to the RB 49, a frequency domain range of the 2nd subband is the RB 50 to the RB 79, a frequency domain range of the guard interval 2 is the RB 80 to the RB 84, and a frequency domain range of the 3rd subband is the RB 85 to the RB 129.

In Example A3, the first information may include a first bitmap (bitmap), and the bitmap may be used to determine the frequency domain range of each of the M subbands. Specifically, the bitmap may include a plurality of bits, and each bit corresponds to a frequency domain range of a specified size. For example, an RB is used as a unit, and each bit corresponds to a specified quantity of RBs. A value of each bit in the bitmap may be 0 or 1. The terminal device may determine the frequency domain range of each of the M subbands based on the value of each bit in the bitmap. A plurality of consecutive bits whose values are first values in the first bitmap may indicate a frequency domain range of one subband, and a bit whose value is a second value may indicate a guard interval between subbands. Optionally, the first value is 0, and the second value is 1, or the first value is 1, and the second value is 0.

For example, the first value is 0, the second value is 1, each bit in the bitmap corresponds to m RBs, and M is 3. When the bitmap is 001000100, it may indicate that a frequency domain range of the 1st subband occupies 2m RBs, a guard interval between the 1st subband and the 2nd subband is m RBs, and a frequency domain range of the 2nd subband occupies 3m RBs, a guard interval between the 2nd subband and the 3rd subband is m RBs, and a frequency domain range of the 3rd subband occupies 2m RBs. m may be a configured value or a preset default value. For another example, the first value is 0, the second value is 1, one bit whose value is 0 in the bitmap corresponds to m RBs, and one bit whose value is 0 in the bitmap corresponds to n RBs. When the bitmap is 001000100, it may indicate that a frequency domain range of the 1st subband occupies 2m RBs, and a guard interval between the 1st subband and the 2nd subband is n RBs, a frequency domain range of the 2nd subband occupies 3m RBs, a guard interval between the 2nd subband and the 3rd subband is n RBs, and a frequency domain range of the 3rd subband occupies 2m RBs when M is 3. m and n may be configured values or preset default values.

In addition, a start RB occupied by the 1st subband in the M subbands may be a configured or preset default RB (for example, a start RB of a CC); or an end RB occupied by a last one of the M subbands may be a configured or preset default RB (for example, an end RB of a CC). Further, the first bitmap may not represent a frequency domain range of the last one of the M subbands. For example, in the foregoing example in which M is 3, the bitmap 001000100 may alternatively be changed to 0010001. The terminal device may directly determine frequency domain ranges of the first two of the three subbands based on the bitmap. For the 3rd subband, the terminal device may determine a frequency domain range of the 3rd subband based on a configured or default end RB and a guard interval (namely, a last bit of the foregoing changed bitmap) between the 2nd subband and the 3rd subband.

Specifically, for example, the frequency domain resource of the CC corresponding to the first frequency domain resource includes 130 RBs, which are denoted as an RB 0 to an RB 129. When M is 3, m corresponds to 15 RBs, n corresponds to five RBs, and the bitmap is 0001001, the 1st subband includes 45 RBs, and a frequency domain range of the 1st subband is the RB 0 to the RB 44. The guard interval 1 between the 1st subband and the 2nd subband includes five RBs, in other words, the guard interval 1 occupies the RB 45 to the RB 49. The 2nd subband includes 30 RBs, and a frequency domain range of the 2nd subband is the RB 50 to the RB 79. The guard interval 2 between the 2nd subband and the 3rd subband includes five RBs, in other words, the guard interval 2 occupies the RB 80 to the RB 84. A frequency domain range of the 3rd subband may be specifically determined based on an end frequency domain bit value of the CC (namely, an end RB of the CC) and an end position of the guard interval 2 (namely, an end RB of the guard interval 2). The frequency domain range of the 3rd subband is the RB 85 to the RB 129.

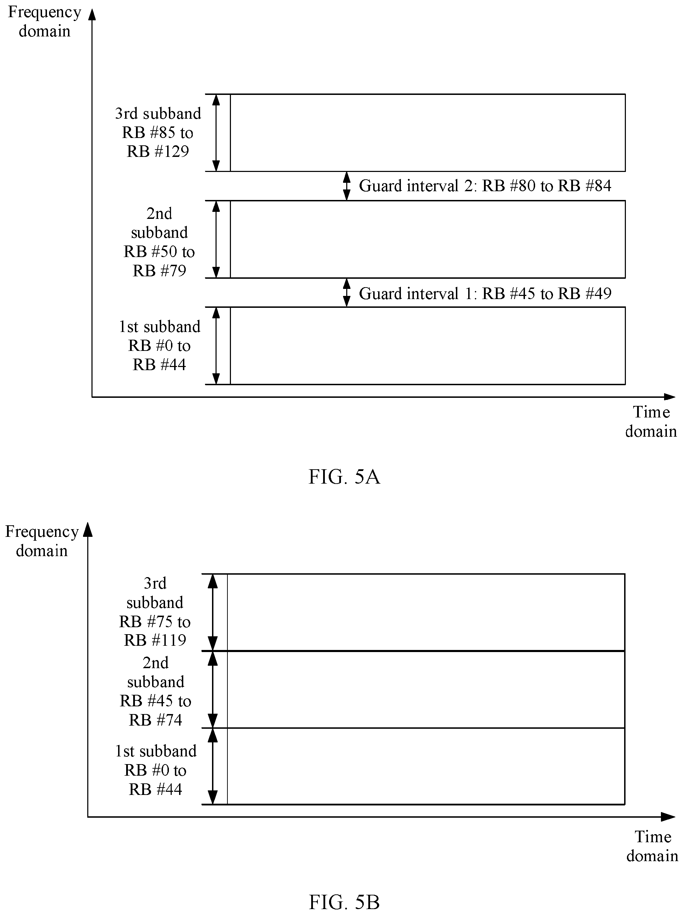

Corresponding to Examples A1 to A3, FIG. 5A is a schematic diagram of a frequency domain range of a subband. Specifically, FIG. 5A shows a case in which there is a guard interval between every two of three subbands. Specifically, FIG. 5A shows that a frequency domain range of a 1st subband is an RB 0 to an RB 44, a frequency domain range of a guard interval 1 between the 1st subband and a 2nd subband is an RB 45 to an RB 49, a frequency domain range of the 2nd subband is an RB 50 to an RB 79, a frequency domain range of a guard interval 2 between the 2nd subband and a 3rd subband is an RB 80 to an RB 84, and a frequency domain range of the 3rd subband is an RB 85 to an RB 129.

In a design in which there is no guard interval between every two of the M subbands, a solution in which the first information indicates the frequency domain range of the at least one of the M subbands may be implemented with reference to any one of following Examples B1 to B3.

In Example B1, the first information may include second frequency domain range information of the at least one of the M subbands. The second frequency domain range information may include at least one of a start resource block RB index, a quantity of RBs, and an end RB index.

Optionally, when M is 3, and the first frequency domain resource corresponds to a frequency domain resource of one CC, the first information may indicate only a frequency domain range of the 2nd subband of the three subbands. For example, the first information may include at least two of a start RB index, a quantity of RBs, and an RB end position of the 2nd subband. For example, when the frequency domain resource of the CC corresponding to the first frequency domain resource includes 120 RBs, which are denoted as an RB 0 to an RB 119, and the first information includes the start RB index and the quantity of RBs of the 2nd subband, which are denoted as {45, 30}, the terminal device may determine that a frequency domain range of a 1st subband is the RB 0 to the RB 44, a frequency domain range of the 2nd subband is the RB 45 to the RB 74, and a frequency domain range of the 3rd subband is the RB 75 to the RB 119.

Optionally, the first information may include first frequency domain range information of M-1 subbands in the M subbands. For example, when M is 2, and the first frequency domain resource corresponds to a frequency domain resource of one CC, the first information may include a quantity of RBs or an end RB index of a 1st subband in the two subbands, or the first information may include a start RB index or a quantity of RBs of a 2nd subband.

In Example B2, the first information may include third frequency domain range information of the at least one of the M subbands, and the third frequency domain range information includes a start RB index or an end RB index. Optionally, the first information may include third frequency domain range information of M-1 subbands in the M subbands. For example, when M is 3, and the first frequency domain resource corresponds to a frequency domain resource of one CC, the first information may include {44, 74}, where 44 indicates an end RB index of a 1st subband, and 74 indicates an end RB index of a 2nd subband. The terminal device may determine, based on the first information, that a frequency domain range of the 1st subband is an RB 0 to an RB 44, a frequency domain range of the 2nd subband is an RB 45 to an RB 74, and a frequency domain range of a 3rd subband is an RB 75 to an RB 119. Alternatively, when M is 3, and the first frequency domain resource corresponds to a frequency domain resource of one CC, the first information may include {45, 75}, where 45 indicates a start RB index of the 2nd subband, and 75 indicates a start RB index of the 3rd subband. The terminal device may determine, based on the first information, that a frequency domain range of the 1st subband is an RB 0 to an RB 44, a frequency domain range of the 2nd subband is an RB 45 to an RB 74, and a frequency domain range of the 3rd subband is an RB 75 to an RB 119.

In Example B3, the first information includes a second bitmap, and a plurality of consecutive bits whose values are a same value in the second bitmap may indicate a frequency domain range of one subband. Each bit in the second bitmap corresponds to m RBs. For example, M is 3. When the bitmap is 00011000, it may indicate that a frequency domain range of the 1st subband occupies 3m RBs, a frequency domain range of the 2nd subband occupies 2m RBs, and a frequency domain range of the 3rd subband occupies 3m RBs. m may be a configured value or a preset default value.

In addition, a start RB occupied by the 1st subband in the M subbands may be a configured or preset default RB (for example, a start RB of a CC); or an end RB occupied by a last one of the M subbands may be a configured or preset default RB (for example, an end RB of a CC). Further, the second bitmap may not represent a frequency domain range of the last one of the M subbands. For example, in the foregoing example in which M is 3, the bitmap 00011000 may alternatively be changed to 00011. The terminal device may directly determine frequency domain ranges of the first two of the three subbands based on the bitmap. For the 3rd subband, the terminal device may determine a frequency domain range of the 3rd subband based on a configured or default end RB and an end RB of the 2nd subband.

Specifically, for example, the frequency domain resource of the CC corresponding to the first frequency domain resource includes 120 RBs, which are denoted as an RB 0 to an RB 119. When M is 3, m corresponds to 15 RBs, and the bitmap is 00011, the 1st subband includes 45 RBs, and a frequency domain range of the 1 st subband is an RB 0 to an RB 44. The 2nd subband includes 30 RBs, and a frequency domain range of the 2nd subband is an RB 45 to an RB 74. A frequency domain range of the 3rd subband may be specifically determined based on an end frequency domain bit value of the CC (namely, an end RB of the CC) and an end position of the 2nd subband (namely, an end RB of the 2nd subband). The frequency domain range of the 3rd subband is an RB 75 to an RB 119.

Corresponding to Examples B1 to B3, FIG. 5B is a schematic diagram of a frequency domain range of a subband. Specifically, FIG. 5B shows a case in which there is no guard interval between every two of three subbands. Specifically, FIG. 5B shows that a frequency domain range of a 1st subband is an RB 0 to an RB 44, a frequency domain range of a 2nd subband is an RB 45 to an RB 74, and a frequency domain range of a 3rd subband is an RB 75 to an RB 119.

Further, optionally, for a manner of sending the first information, refer to following Solution 1 or Solution 2.

Solution 1: The first information may be configured by a higher layer. For example, the access network device may send the first information to the terminal device through RRC. Specifically, refer to following Manner C1 or Manner C2 for implementation.

In Manner C1, the first information may be specifically implemented by the access network device by using a TDD configuration sent through the RRC. For example, the access network device may send a first TDD configuration to the terminal device, and the first TDD configuration may be used to determine the symbol type corresponding to at least one of the M subbands on the symbol in the first time domain resource.

Optionally, the first TDD configuration may further indicate the frequency domain range of the at least one of the M subbands. A solution of indicating the frequency domain range of the at least one of the M subbands through the first TDD configuration may be implemented with reference to any one of foregoing Examples A1 to A3, or any one of the foregoing Examples B1 to B3. The first TDD configuration may correspond to the first information in the examples. Details are not described in this embodiment of this application again. Alternatively, optionally, the frequency domain range of each of the M subbands may be preset, and the first TDD configuration may carry an identifier of the at least one of the M subbands.

The first TDD configuration may be classified into a cell-level first TDD configuration and a terminal device-level first TDD configuration.

Corresponding to the cell-level first TDD configuration, the first TDD configuration may be denoted as TDD-ConfigCommon2, TDD-ConfigCommon2 includes an identifier of each subband and symbol type configurations corresponding to N subbands, and N is a positive integer less than or equal to M. A symbol type configuration corresponding to one subband may be used to configure a symbol type corresponding to the subband on a part or all of symbols of the first time domain resource. For example, the symbol type configuration corresponding to the subband includes a periodicity (for example, which corresponds to the first time domain resource) of TDD-ConfigCommon2, a quantity of downlink slots corresponding to the subband in the periodicity, a quantity of uplink slots corresponding to the subband in the periodicity, a quantity of downlink symbols corresponding to the subband in the periodicity, a quantity of uplink symbols corresponding to the subband in the periodicity, and a remaining symbol for which no symbol type is configured is a flexible symbol. In addition, if the first frequency domain resource corresponds to a frequency domain resource occupied by one CC in the TDD system, a symbol type, on the symbol in the first time domain resource, corresponding to a subband other than the N subbands in the first frequency domain resource may be determined based on TDD-ConfigCommon of the CC.

Corresponding to the terminal device-level first TDD configuration, the first TDD configuration may be denoted as TDD-ConfigDedicated2, TDD-ConfigDedicated2 includes an identifier of each subband and symbol type configurations corresponding to the N subbands, and N is a positive integer less than or equal to M. A symbol type configuration corresponding to one subband may be used to configure a symbol type corresponding to the subband on a part or all of symbols of the first time domain resource. For example, the symbol type configuration corresponding to the subband includes an ID of a specified slot (for example, which corresponds to the first time domain resource), a quantity of uplink symbols and/or a quantity of downlink symbols corresponding to the subband in the specified slot, and a remaining symbol for which no symbol type is configured is a flexible symbol. In addition, if the first frequency domain resource corresponds to a frequency domain resource occupied by one CC in the TDD system, a symbol type, on the symbol in the first time domain resource, corresponding to a subband other than the N subbands in the first frequency domain resource may be determined based on TDD-ConfigDedicated of the CC.

In Manner C2, the first information may be specifically implemented by the access network device by using a plurality of TDD configurations sent by the access network device through the RRC. For example, the first information sent by the access network device to the terminal device may include N second TDD configurations, and one second TDD configuration may be used to determine a symbol type corresponding to one of the M subbands on the symbol in the first time domain resource. N is a positive integer less than or equal to M.

Optionally, one second TDD configuration may further indicate a frequency domain range of the one of the M subbands. A solution of indicating the frequency domain range of the at least one of the M subbands by using the second TDD configuration may be implemented with reference to any one of foregoing Examples A1 to A3, or any one of the foregoing Examples B1 to B3. Details are not described in this embodiment of this application again. Alternatively, optionally, the frequency domain range of each of the M subbands may be preset, and the second TDD configuration may carry an identifier of one of M subbands.

The second TDD configuration may be classified into a cell-level second TDD configuration and a terminal device-level second TDD configuration.

Corresponding to the cell-level second TDD configuration, the second TDD configuration may be denoted as TDD-ConfigCommon2. The first information includes N pieces of TDD-ConfigCommon2, and one piece of TDD-ConfigCommon2 may include the identifier of the one of the M subbands and a symbol type configuration corresponding to the subband. A symbol type configuration corresponding to one subband may be used to configure a symbol type corresponding to the subband on a part or all of symbols of the first time domain resource. For example, the symbol type configuration corresponding to the subband includes a periodicity (for example, which corresponds to the first time domain resource) of TDD-ConfigCommon2 corresponding to the subband, a quantity of downlink slots corresponding to the subband in the periodicity, a quantity of uplink slots corresponding to the subband in the periodicity, a quantity of downlink symbols corresponding to the subband in the periodicity, a quantity of uplink symbols corresponding to the subband in the periodicity, and a remaining symbol for which no symbol type is configured is a flexible symbol. In addition, if the first frequency domain resource corresponds to a frequency domain resource occupied by one CC in the TDD system, a symbol type, on the symbol in the first time domain resource, corresponding to a subband other than the subbands indicated by the N pieces of TDD-ConfigCommon2 in the first frequency domain resource may be determined based on TDD-ConfigCommon of the CC.

Corresponding to the terminal device-level second TDD configuration, the second TDD configuration may be denoted as TDD-ConfigDedicated2. The first information includes N pieces of TDD-ConfigDedicated2, and one piece of TDD-ConfigDedicated2 includes the identifier of the one of the M subbands and a symbol type configuration corresponding to the subband. A symbol type configuration corresponding to one subband may be used to configure a symbol type corresponding to the subband on a part or all of symbols of the first time domain resource. For example, the symbol type configuration corresponding to the subband includes a periodicity (for example, which corresponds to the first time domain resource) of TDD-ConfigDedicated2 corresponding to the subband, a quantity of downlink slots corresponding to the subband in the periodicity, a quantity of uplink slots corresponding to the subband in the periodicity, a quantity of downlink symbols corresponding to the subband in the periodicity, a quantity of uplink symbols corresponding to the subband in the periodicity, and a remaining symbol for which no symbol type is configured is a flexible symbol. In addition, if the first frequency domain resource corresponds to a frequency domain resource occupied by one CC in the TDD system, a symbol type, on the symbol in the first time domain resource, corresponding to a subband other than the subbands indicated by the N pieces of TDD-ConfigCommon2 in the first frequency domain resource may be based on TDD-ConfigDedicated of the CC.

Solution 2: The first information may be indicated by using DCI. For example, the access network device may indicate the first information to the terminal device by using one or more pieces of DCI2-0. Specifically, refer to the following manner D1 or manner D2 for implementation.

In the manner D1, the first information includes N indexes, one of the N indexes indicates a slot format corresponding to one of the M subbands in at least one slot in the first time domain resource, the slot format indicates a symbol type of each symbol in one slot, and N is a positive integer less than or equal to M.

The index may be specifically an SFI index, that is, the first information includes N SFI indexes. The access network device may preconfigure a slot format combination table for the terminal device. The slot format combination table includes a plurality of slot format combinations. One of the N SFI indexes indicates one slot format combination in the slot format combination table. A slot format combination indicated by one SFI index corresponding to one subband is used to determine a slot format corresponding to the subband in at least one slot in the first time domain resource. To be specific, a slot format combination may be used to configure a slot format in the at least one slot. For example, in this embodiment of this application, a slot format combination table is shown in the following Table 2.

**Table 2**

| Combination index | Slot format combination |
|---|---|
| 0 | {1, 2, 3} |
| 1 | {7, 8, 9} |
| 2 | {0, 4, 5} |
| ... | |

When Table 2 is applied to the manner D1 in the solution 2, an SFI index corresponding to one of the M subbands corresponds to one combination index in Table 2. Each index in the slot format combination may be a format index in Table 1. A slot format combination {1, 2, 3} is used as an example. The slot format combination may indicate slot formats in three slots. A slot format in the first slot in the three slots may be configured based on a slot format corresponding to a format index "1" in Table 1, a slot format in the second slot may be configured based on a slot format corresponding to a format index "2" in Table 1, and a slot format in the third slot may be configured based on a slot format corresponding to a format index "3" in Table 1.

Optionally, for a manner of indicating, by the access network device, the first information to the terminal device, refer to following Example D11 or Example D12 for implementation.

Example D11: The access network device uses N pieces of DCI2-0 to indicate, to the terminal device, first information including N indexes (SFI indexes). Specifically, the access network device may send N pieces of DCI2-0 to the terminal device, and each piece of DCI2-0 includes an SFI index and information indicating one of the M subbands, for example, frequency domain range information or an identifier of a subband, or a bitmap that may be used to determine a frequency domain range of the subband. In addition, it should be noted that different subbands may correspond to different time lengths of slots indicated by an SFI index, but a time length of a slot indicated by an SFI index is greater than or equal to a periodicity of DCI2-0 in which the SFI index is located.

Example D12: The access network device uses one piece of DCI2-0 to indicate, to the terminal device, first information including N indexes (SFI indexes). Specifically, the access network device may send one piece of DCI2-0 to the terminal device, where the DCI2-0 includes N SFI indexes and one third bitmap indicating N subbands in the M subbands. The N SFI indexes one-to-one correspond to the N subbands in the M subbands. The third bitmap includes M bits, and one of the M bits corresponds to one of the M subbands. Optionally, values of N bits of the M bits are a first value, and a slot format of a subband corresponding to any one of the N bits is modified based on the DCI2-0. In other words, values of (M-N) bits of the M bits other than N are a second value, and a slot format of a subband corresponding to any one of the (M-N) bits is modified not based on the DCI2-0. Optionally, the first value is 0, and the second value is 1, or the first value is 1, and the second value is 0. For example, the first value is 1, the second value is 0, and M is 3. When the bitmap is 110, it may indicate that the slot formats of the 1st subband and the 2nd subband of the three subbands are modified based on the DCI2-0, and the slot format of the 3rd subband is modified not based on the DCI2-0. In this case, a value of N is 2.

Further, optionally, the access network device may indicate, to the terminal device, a position of one or N SFI indexes included in one piece of DCI2-0 in the foregoing example. When receiving the DCI2-0, the terminal device may determine a related SFI index based on the position of the one or N SFI indexes indicated by the access network device.

Specifically, a field length occupied by an SFI index in the DCI2-0, for example, in a unit of a quantity of bits, is denoted as including k occupied bits. A value of k may be predefined or determined based on a maximum value of a combination index of a first column in Table 2 configured via RRC. For example, $k=\max\left\{\lceil log_2\ (maxSFIindex+1)\rceil, 1\right\}$, where maxSFIindex is a maximum value of a parameter slotFormatCombinationId configured via RRC; slotFormatCombinationId corresponds to the first column in Table 2; $\lceil a \rceil$ indicates an integer obtained after rounding up a, and is a minimum integer greater than a; and max {c, d} indicates a maximum value of c and d. It should be noted that a, c, and d herein indicate variables, and have no actual meaning. The access network device may indicate, to the terminal device, a start position (for example, a start bit) of the first SFI index in the one or N SFI indexes in the DCI2-0. For example, when the one piece of DCI2-0 includes N SFI indexes, the access network device may indicate a start position of the first index of the N SFI indexes in the DCI2-0, and the terminal device may read N*k bits starting from the start position of the first SFI index in the DCI2-0, to determine values of the N SFI indexes. For another example, when the one piece of DCI2-0 includes one SFI index, the access network device may indicate a start position (for example, a start bit) of the SFI index in the DCI2-0 to the terminal device, and the terminal device may read k bits starting from the start position of the SFI index in the DCI2-0, to determine a value of the SFI index.

In the manner D2, the first information includes an index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M. It may be understood that the N groups of slot formats indicated by the index are configured as slot formats corresponding to N subbands in the M subbands. If N is less than M, the access network device may indicate the N subbands to the terminal device by using DCI/RRC. If N is equal to M, the N subbands do not need to be additionally indicated.

The index included in the first information may be specifically the SFI index. Optionally, the access network device may send, to the terminal device, DCI2-0 carrying an SFI index, to indicate the first information to the terminal device. Specifically, a field length occupied by an SFI index in the DCI2-0, for example, in a unit of a quantity of bits, may be denoted as including k occupied bits. For a definition of a value of k, refer to the description in the foregoing Example D12 for understanding. Details are not described in this embodiment of this application again. The access network device may indicate a start position (for example, a start bit) of the SFI index in the DCI2-0 to the terminal device, and the terminal device may read k bits starting from the start position of the SFI index in the DCI2-0, to determine a value of the SFI index.

Optionally, for a definition of the SFI index, refer to following Example D21 or Example D22 for implementation.

Example D21: The access network device may preconfigure an SFI index table for the terminal device. An SFI index included in the first information may be one SFI index in the SFI index table. The SFI index table includes a plurality of SFI indexes and a combination index combination indicated by each SFI index. The combination index combination may include N combination indexes, that is, one SFI index corresponds to N combination indexes. One combination index may be one combination index in the slot format combination table (Table 2). A combination index may indicate a group of slot formats (namely, one slot format combination). In this case, N groups of slot formats indicated by the SFI index included in the first information may be specifically a slot format combination indicated by the N combination indexes corresponding to the SFI index. For example, N is 3. Refer to the following Table 3. An SFI index table is shown.

**Table 3**

| SFI index | Combination index combination |
|---|---|
| 0 | {0, 3, 4} |
| 1 | {1, 3, 4} |
| 2 | {3, 4, 5} |
| 3 | {7, 8, 9} |
| 4 | {6, 7, 9} |

The SFI index included in the first information may be one SFI index in Table 3, and corresponds to one combination index combination. For example, an SFI index is 0, and a corresponding combination index combination is {0, 3, 4}. The combination index combination may indicate that three combination indexes in the slot format combination table (for example, Table 2) are 0, 3, and 4 separately. In other words, the SFI index may indicate a slot format combination corresponding to the combination index "0", and the slot format combination corresponding to the combination index "0" may be used to determine a slot format corresponding to the 1st subband of the three subbands in the at least one slot in the first time domain resource. The SFI index may indicate a slot format combination corresponding to the combination index "3", and the slot format combination corresponding to the combination index "3" may be used to determine a slot format corresponding to the 2nd subband of the three subbands in at least one slot in the first time domain resource. The SFI index may indicate a slot format combination corresponding to the combination index "4", and the slot format combination corresponding to the combination index "4" may be used to determine a slot format corresponding to the 3rd subband of the three subbands in at least one slot in the first time domain resource.

Example D22: The access network device may preconfigure a slot format combination table for the terminal device. The slot format combination table includes a plurality of slot format combinations and a combination index corresponding to each slot format combination. Each slot format combination may be configured as a slot format corresponding to one or more subbands in at least one slot. The SFI index included in the first information may indicate one slot format combination in the slot format combination table. For example, the SFI index included in the first information is associated with an index of one slot format combination in the slot format combination table. A combination of slot formats indicated by the SFI index included in the first information may be divided into the N groups of slot formats described in the manner D2.

In addition, it should be noted that the slot format combination table in Example D22 and the slot format combination table described in the manner D 1 may be a same table, or it may be understood that the two may be combined into a same table. Alternatively, the slot format combination table in Example D22 and the slot format combination table described in the manner D1 are different tables. This is not limited in embodiments of this application. For example, the slot format combination table in Example D22 and the slot format combination table described in the manner D1 may be a same table. The following Table 4 shows a slot format combination table.

**Table 4**

| Combination index | Slot format combination |
|---|---|
| 0 | {1, 2, 3} |
| 1 | {7, 8, 9} |
| 2 | {0, 4, 5} |
| 3 | {0, 0, 5, 0, 0, 0, 0, 12, 1, 1, 0, 12, 1, 1} |
| 4 | {0, 0, 5, 1, 5, 1, 0, 0, 0, 0, 0, 12, 1, 1} |
| ... | |

When Table 4 is applied to the manner D2 in Solution 2, the SFI index included in the first information may be associated with one combination index in Table 4, and indexes in the slot format combination may be format indexes in Table 1. A slot format combination {1, 2, 3} is used as an example. "1" in {1, 2, 3} may indicate a slot format corresponding to the format index "1" in Table 1, "2" in {1, 2, 3} may indicate a slot format corresponding to the format index "2" in Table 1, and "3" in {1, 2, 3} may indicate a slot format corresponding to the format index "3" in Table 1.

Optionally, the access network device may indicate, to the terminal device in advance, a subcarrier spacing (subcarrier spacing, SCS) corresponding to each of the N subbands, or configure an SCS corresponding to each of the N subbands through RRC. For example, when N is 3, a parameter subcarrierSpacing in a SlotFormatCombinationsPerCell information element indicates an SCS of a 1st subband, subcarrierSpacing2 indicates an SCS of a 2nd subband, and subcarrierSpacing3 indicates an SCS of a 3rd subband, subcarrier spacings corresponding to different subbands may be configured to be the same or different. When SCSs corresponding to different subbands are the same, parameters subcarrierSpacing2 and subcarrierSpacing3 may be set to default values. Subbands with different subcarrier spacings correspond to different time lengths of one slot. In this case, the slot format combinations indicated by the SFI index included in the first information may be divided into the N groups of slot formats described in the manner D2. For details, refer to the following two optional implementations.

In an optional implementation, it may be set that $2^{\mu 1}$ slot formats starting from the first in every $(2^{\mu 1}+...+2^{\mu N})$ slot formats in the slot format combination indicated by the SFI index are used to configure the 1st subband in the N subbands, $2^{\mu 2}$ slot formats starting from the $(2^{\mu 1}+1)$th are used to configure the 2nd subband in the N subbands, and by analogy, $2^{\mu N}$ slot formats starting from $(2^{\mu 1}+...+2^{\mu N-1}+1)$th are used to configure an Nth subband of the N subbands. A value of $\mu 1$ is related to an SCS corresponding to the 1st subband, a value of $\mu 2$ is related to an SCS corresponding to the 2nd subband, and by analogy. A value of $\mu N$ is related to an SCS corresponding to the Nth subband. For example, the SCS corresponding to the 1st subband is denoted as 15 kHz*$2^{\mu 1}$, the SCS corresponding to the 2nd subband is denoted as 15 kHz*$2^{\mu 2}$, and by analogy, the SCS corresponding to the Nth subband is denoted as 15 kHz*$2^{\mu N}$. Values of $\mu 1$, $\mu 2$, ..., and $\mu N$ may be the same; or values of $\mu 1$, $\mu 2$, ..., and $\mu N$ may be partially the same or partially different;

or values of $\mu1$, $\mu2$, ..., and $\mu N$ may be different.

For example, N is equal to 3. In the slot format combination indicated by the SFI index, the first $2^{\mu1}$ slot formats in every ($2^{\mu1}+2^{\mu2}+2^{\mu3}$) slot formats are used to configure the 1st subband of the three subbands, and subsequent $2^{\mu2}$ slot formats starting from the $(2^{\mu1}+1)$th slot format are used to configure the 2nd subband of the three subbands, the last $2^{\mu3}$ slot formats, that is, $2^{\mu3}$ slot formats starting from the $(2^{\mu1}+2^{\mu2}+1)$th slot formats, are used to configure the 3rd subband of the three subbands.

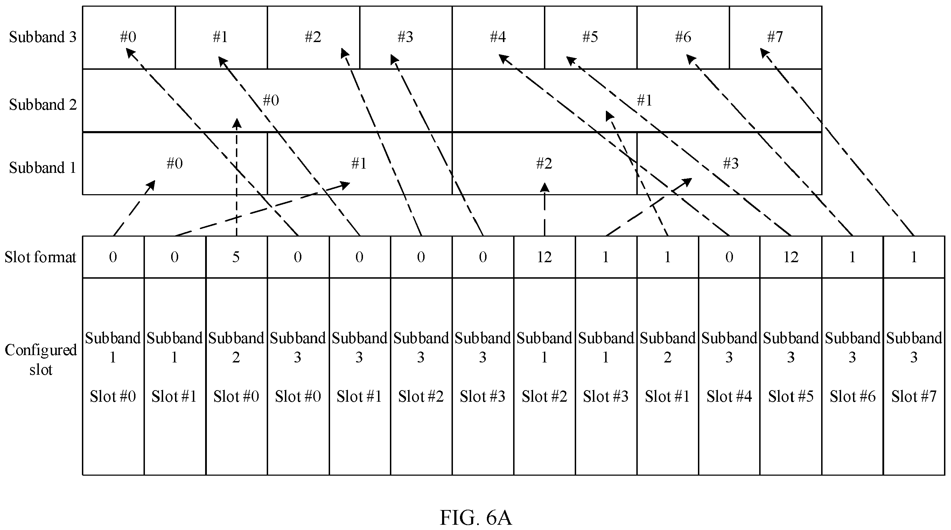

Further, for example, the SFI index included in the first information indicates a slot format combination {0, 0, 5, 0, 0, 0, 0, 12, 1, 1, 0, 12, 1, 1} in Table 4. It is assumed that the SCS corresponding to the 1st subband is 30 kHz, and a value of $\mu1$ is 1; the SCS corresponding to the 2nd subband is 15 kHz, and a value of $\mu2$ is 0; and the SCS corresponding to the 3rd subband is 60 kHz, and a value of $\mu3$ is 2. As shown in FIG. 6A, a ratio of a time length of a slot corresponding to a subband 2 (namely, the 2nd subband) to a time length of a slot corresponding to a subband 3 (namely, the 3rd subband) is 4:1, and a ratio of a time length of a slot corresponding to the subband 2 (namely, the 2nd subband) to a time length of a slot corresponding to a subband 1 (namely, the 1st subband) is 2:1. A process of dividing the slot format combination into three groups of slot formats according to the foregoing implementation is as follows:

First time: In 7 ($2^{\mu1}+2^{\mu2}+2^{\mu3}$) slots indicated by the slot format combination {0, 0, 5, 0, 0, 0, 0, 12, 1, 1, 0, 12, 1, 1}, that is, in {0, 0, 5, 0, 0, 0, 0}, the first {0, 0} is used to configure slot formats of two slots (a slot #0 and a slot #1) corresponding to the subband 1, and the subsequent {5} is used to configure a slot format of one slot (a slot #0) corresponding to the subband 2, and the last {0, 0, 0, 0} may be use to configure slot formats of four slots (a slot #0, a slot #1, a slot #2, and a slot #3) corresponding to the subband 3.

Second time: In the 7 ($2^{\mu1}+2^{\mu2}+2^{\mu3}$) slots indicated by the slot format combination {0, 0, 5, 0, 0, 0, 0, 12, 1, 1, 0, 12, 1, 1}, that is, in {12, 1, 0, 12, 1}, the first {12, 1} is used to configure slot formats of two slots (a slot #2 and a slot #3) corresponding to the subband 1, and the subsequent {1} is used to configure a slot format of one slot (a slot #1) corresponding to the subband 2, and the last {1, 0, 12, 1} is used to configure slot formats of four slots (a slot #4, a slot #5, a slot #6, and a slot #7) corresponding to the subband 3.

It may be understood that in this implementation, the slot format combination is divided into three groups of slot formats. One group of slot formats corresponding to the subband 1 is {0, 0, 12, 1}, one group of slot formats corresponding to the subband 2 is {5, 1}, and one group of slot formats corresponding to the subband 3 is {0, 0, 0, 1, 0, 12, 1}.

In another optional implementation, it may be set that consecutive slot formats in the slot format combination indicated by the SFI index are used to configure one of the N subbands. For example, a total quantity of slot formats included in the slot format combination indicated by the SFI index is denoted as S, and a coefficient K is calculated according to a formula $K = \left\lfloor \dfrac{S}{2^{\mu1}+\cdots...+2^{\mu N}} \right\rfloor$, where $\lfloor a \rfloor$ indicates an integer obtained after rounding down a, and is a maximum integer less than a; and a indicates a variable that has no actual meaning. It is set that, in the slot format combination indicated by the SFI index, $K*2^{\mu1}$ slot formats starting from the first are used to configure the 1st subband in the N subbands, $K*2^{\mu2}$ slot formats starting from the $(K*2^{\mu1}+1)$th are used to configure the 2nd subband in the N subbands, and by analogy, $K*2^{\mu N}$ slot formats starting from the $(K*(2^{\mu1}+...+2^{\mu N-1}))$th are used to configure an Nth subband of the N subbands.

A value of $\mu1$ is related to an SCS corresponding to the 1st subband, a value of $\mu2$ is related to an SCS corresponding to the 2nd subband, and by analogy. A value of $\mu N$ is related to an SCS corresponding to the Nth subband. For example, the SCS corresponding to the 1st subband is denoted as 15 kHz$*2^{\mu1}$, the SCS corresponding to the 2nd subband is denoted as 15 kHz$*2^{\mu2}$, and by analogy, the SCS corresponding to the Nth subband is denoted as 15 kHz$*2^{\mu N}$. Values of $\mu1$, $\mu2$, ..., and $\mu N$ may be the same; or values of $\mu1$, $\mu2$, ..., and $\mu N$ may be partially the same or partially different; or values of $\mu1$, $\mu2$, ..., and $\mu N$ may be different.

For example, N is equal to 3. In the slot format combination indicated by the SFI index, the first $K*2^{\mu1}$ slot formats are used to configure the 1st subband of the three subbands, and subsequent $K*2^{\mu2}$ slot formats, namely, $K*2^{\mu2}$ slot formats starting from the $(K*2^{\mu1}+1)$th subband, are used to configure the 2nd subband of the three subbands, then, subsequent $K*2^{\mu3}$ slot formats starting from the $(K*(2^{\mu1}+2^{\mu2})+1)$th slot are used to configure the 3rd subband of the three subbands.

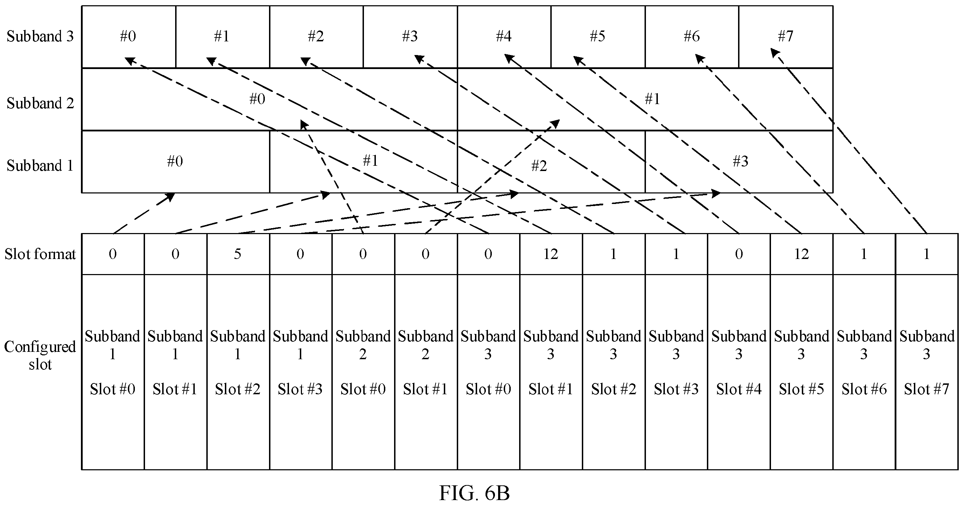

Further, for example, the SFI index included in the first information indicates a slot format combination {0, 0, 5, 1, 5, 1, 0, 0, 0, 0, 0, 12, 1, 1} in Table 4. The slot format combination includes 15 slot formats. It is assumed that an SCS corresponding to a 1st subband is 30 kHz, and a value of $\mu1$ is 1; an SCS corresponding to a 2nd subband is 15 kHz, and a value of $\mu2$ is 0; and an SCS corresponding to a 3rd subband is 60 kHz, and a value of $\mu3$ is 2. As shown in FIG. 6B, a ratio of a time length of a slot corresponding to a subband 2 (namely, the 2nd subband) to a time length of a slot corresponding to a subband 3 (namely, the 3rd subband) is 4:1, and a ratio of a time length of a slot corresponding to the subband 2 (namely, the 2nd subband) to a time length of a slot corresponding to a subband 1 (namely, the 1st subband) is 2:1. A process of dividing the slot format combination into three groups of slot formats according to the foregoing implementation is as follows:

$$\text{Calculate } K = \left\lfloor \frac{15}{2+1+4} \right\rfloor = 2.$$

In the slot format combination {0, 0, 5, 0, 0, 0, 0, 12, 1, 1, 0, 12, 1, 1}, the first four slot formats, that is, {0, 0, 5, 0}, are used to configure slot formats of four slots (the slot #0, the slot #1, the slot #3, and the slot #4) corresponding to the subband 1, and the subsequent {0, 0} are used to configure slot formats of two slots (the slot #0, the slot #1) corresponding to the subband 2, and the last {0, 12, 1, 1, 0, 12, 1} are used to configure slot formats of eight slots (the slot #0, the slot #1, the slot #2, the slot #3, the slot #4, the slot #5, the slot #6, and the slot #7) corresponding to the subband 3.

In other words, the slot format combination is finally divided into three groups of slot formats. One group of slot formats corresponding to the subband 1 is {0, 0, 5, 0}, one group of slot formats corresponding to the subband 2 is {0, 0}, and one group of slot formats corresponding to the subband 3 is {0, 12, 1, 1, 0, 12, 1}.

Further, the following describes in detail a manner in which the access network device preconfigures a slot format combination table and a start position of an SFI index for the terminal device in the foregoing manner D1 and/or manner D2.

Because the SFI index may indicate a slot format for a group of terminal devices, when the terminal devices are grouped, a new terminal device and a legacy terminal device may be in a group or not in a group. Considering a capability difference between the new terminal device and the legacy terminal device, the access network device may specifically configure the slot format combination table and the start position of the SFI index for the terminal device in the following manner.

Example 1: The access network device may add slotFormatCombination2 to an information element SlotFormatCombinationsPerCell, where slotFormatCombination2 indicates a newly added slot format combination table. slotFormatCombination2 can be distinguished from slotFormatCombination in a conventional technology. A new terminal device that has a capability of identifying a subband-level symbol type configuration may read slotFormatCombinations2, and a legacy terminal device that does not have a capability of identifying a subband-level symbol type configuration may read slotFormatCombinations. This can avoid impact of the newly added slot format combination table (Table 2/Table 4) on the legacy terminal device.

Example 2: The access network device adds positionInDCI2 to an information element SlotFormatCombinationsPerCell, where positionInDCI2 indicates a start position of an SFI index in DCI2-0. This can be distinguished from positionInDCI in a conventional technology. A new terminal device that has a capability of identifying a subband-level symbol type configuration may read positionInDCI2, and a legacy terminal device that does not have a capability of identifying a subband-level symbol type configuration may read positionInDCI. This can avoid impact on the legacy terminal device.

It should be noted that the access network device may use Example 1 and/or Example 2 in the RRC configuration. For example, when only Example 2 is used, only one slot format combination table is configured, some rows in the slot format combination table are applicable to the legacy terminal device, and some rows are applicable to the new terminal device. The legacy terminal device may read, based on positionInDCI, that a value of a field 1 in the DCI2-0 is an SFI index, and the new terminal device reads, based on positionInDCI2, that a value of a field 2 in the DCI2-0 is an SFI index. Different values of the SFI indexes read by the legacy terminal device and the new terminal device are different, so that different rows in the slot format combination table can be indicated to the legacy terminal device and the new terminal device.

Optionally, when the terminal devices are grouped, if the new terminal device and the legacy terminal device are grouped into different groups, different slot format combination tables may be configured for terminal devices in different groups. For example, for a group in which a new terminal device is located, a slot format combination table a (Table 2/Table 4) is configured by using slotFormatCombination in the information element SlotFormatCombinationsPerCell. In the group in which the legacy terminal device is located, a slot format combination table b is configured by using slotFormatCombination in the information element SlotFormatCombinationsPerCell. A same combination index may be in the slot format combination table a and the slot format combination table b, but a same combination index in the slot format combination table a and the slot format combination table b correspond to different slot format combinations.

In addition, optionally, the access network device may further configure, through RRC, whether the terminal device determines, by using the Solution 2, symbol type configurations corresponding to a plurality of subbands, or may be understood as that the access network device may configure, through RRC, whether the terminal device uses a subband-level SFI index to perform slot format configuration. Specifically, an explicit manner may be used for indication. For example, the access network device adds, to RRC, indication information indicating whether to use the subband-level SFI index to perform slot format configuration. Alternatively, an implicit manner may be used for indication. For example, the access network device configures a subband-level frequency domain range through RRC, for example, a cell-level TDD configuration or a terminal device-level TDD configuration, to implement the subband-level symbol type configuration. For example, the access network device indicates an SFI index table in the RRC configuration. For another example, the access network device adds a parameter when configuring an existing information element of the RRC, for example, adds parameters, such as slotFormatCombinations2, positionInDCI2, and the like, to SlotFormatCombinationsPerCell, the terminal device may determine to perform slot format configuration by using a subband-level SFI index.

In addition, it should be noted that, for a subband for which a slot format is configured by using a subband-level SFI index, a symbol type corresponding to the subband is not affected by a symbol type corresponding to another subband for which a symbol type is configured by using TDD.

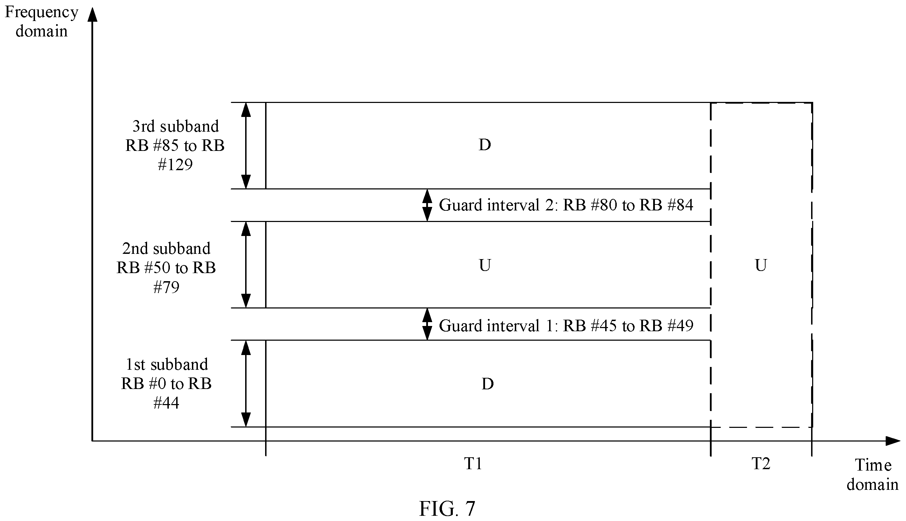

After a subband-level symbol type configuration is completed by using Solution 1 or Solution 2, a plurality of subbands may correspond to a same symbol type on a specific time domain resource, or a plurality of subbands may correspond to a same transmission direction of configuration signal transmission on a specific time domain resource. In the two cases, when there is a guard interval between subbands, the guard interval between subbands may be used for signal transmission. For example, FIG. 7 is a schematic diagram of a symbol type configuration. Based on FIG. 5A, it is shown that symbol types corresponding to three subbands on a time domain resource segment T1 after symbol type configuration is completed are not completely the same. For example, symbol types corresponding to a 1st subband and a 3rd subband on T1 are both downlink (denoted as D), and a symbol type corresponding to a 2nd subband on T1 is uplink (denoted as U). The guard interval between subbands on the time domain resource segment T1 is not used for signal transmission. This can reduce impact, on signal transmission of a subband, of a subband that is close to a position of the subband in frequency domain and that has a different symbol type configuration. After the symbol type configuration is completed, symbol types corresponding to the three subbands on the time domain resource T2 are the same. For example, the symbol types or transmission directions for configuring signal transmission corresponding to the 1st subband, the 2nd subband, and the 3rd subband on the time domain resource T2 are all uplink (denoted as U). A guard interval between subbands on the time domain resource T2 may be used for signal transmission, or may be understood as on the time domain resource T2, the RB #0 to the RB #129 may be considered as a whole, and symbol types corresponding to the RB #0 to the RB #129 on the time domain resource segment T2 are all uplink (denoted as U).

In addition to the foregoing S401 to S403, the following S404 may be further performed. S404 may be considered as an optional step, and is shown by using a dashed line in FIG. 4.

S404: The terminal device sends a signal and/or receives a signal through the first frequency domain resource based on the first information.

Specifically, resources (for example, frequency domain resources and/ortime resources) occupied for transmitting signals in different transmission directions and configured on the first frequency domain resource may overlap. This results in a signal transmission collision. Alternatively, a transmission direction of a signal configured on the first frequency domain resource may not match a symbol type of a symbol occupied for signal transmission. This results in a signal transmission collision. The following further describes some collision handling manners in different cases.

Case 1: Signals are configured to be transmitted on a plurality of frequency domain resources and on a same time domain resource, but transmission directions of the signals are different. A terminal device using a half-duplex communication mode may perform collision handling according to a solution described in E1, a terminal device using a subband full-duplex communication mode may perform collision handling according to a solution described in E2, and a terminal device using a full-duplex communication mode may perform collision handling according to a solution described in E3.

It should be noted that, in Case 1, unless otherwise defined, during actual signal transmission, a transmission direction of a signal does not conflict with a symbol type configuration on a time domain resource. For example, the terminal device sends a signal to the access network device on a symbol corresponding to a frequency domain resource, and a symbol type of the symbol is not configured or is configured as uplink/flexible.

E1: For the terminal device using the half-duplex communication mode, if a plurality of signals are configured to be transmitted on a same time domain resource, there is no intersection between frequency domain resources in which the plurality of signals are located, but transmission directions are different, a signal in one transmission direction may be transmitted.

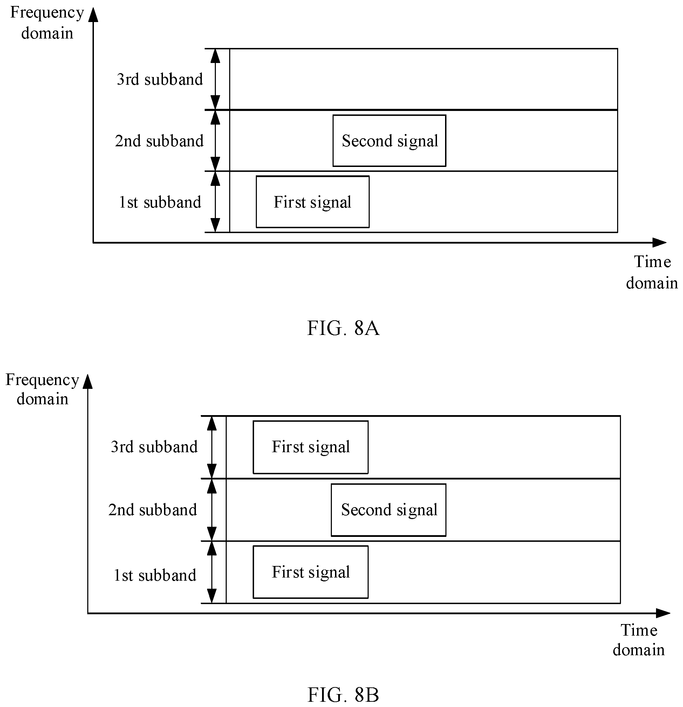

A frequency domain resource occupied by each of the plurality of signals may be a frequency domain resource on one subband, and different signals are located on different subbands. For example, FIG. 8A shows a case in which signals are configured to be transmitted on a plurality of subbands. The first frequency domain resource includes three subbands without a guard interval, where a first signal is configured to be transmitted on a 1st subband, and a second signal is configured to be transmitted on a 2nd subband. Transmission directions of the first signal and the second signal are opposite. The first signal and the second signal occupy different subbands, and there is an intersection between time domain resources occupied by the first signal and the second signal. In addition, optionally, there may be at least one signal in the plurality of signals, and the at least one signal may be located on a plurality of subbands. Alternatively, it may be understood that the at least one signal in the plurality of signals is configured to be transmitted across subbands. For example, FIG. 8B shows a case in which signals are configured to be transmitted on a plurality of subbands. The first frequency domain resource includes three subbands without a guard interval, where a first signal is configured to be transmitted on a 1st subband and a 3rd subband, and a second signal is configured to be transmitted on a 2nd subband. Transmission directions of the first signal and the second signal are opposite. Although the first signal and the second signal occupy different subbands, there is an intersection between time domain resources occupied by the first signal and the second signal.

The following uses FIG. 8A as an example to describe the E1 solution in detail.

In an optional manner, the terminal device using the half-duplex communication mode may determine one reference subband in the plurality of subbands, and perform actual signal transmission on the reference subband based on a signal configured to be transmitted on the reference subband. If the reference subband is configured to receive or send a first signal on a second time domain resource, a first subband is configured to receive or send a second signal on the second time domain resource, and transmission directions of the first signal and the second signal are opposite, the terminal device using the half-duplex communication mode may receive or send the first signal on the second time domain resource by using the reference subband, or not receive or send the second signal on the second time domain resource by using the first subband. The second time domain resource corresponds to a same time domain resource described in E1, and the second time domain resource may include one or more symbols. In addition, optionally, the first time domain resource includes the second time domain resource. For example, symbols occupied by the second time domain resource may be some symbols in the first time domain resource.

A subband on which signal is configured to be transmitted is denoted as a second subband, and second subbands may include a plurality of subbands. Any one of the second subbands is configured to send or receive a signal on the second time domain resource. Definitions of the reference subband and the first subband may be understood as follows: The reference subband may be a subband with a smallest subband index in the second subbands, or the reference subband is a subband predefined in the second subbands. The first subband may be any subband other than the reference subband in the second subbands.

For example, the second time domain resource includes one symbol, for example, is denoted as a first symbol. That a subband is configured to send or receive a signal on a first symbol may include but is not limited to the following several cases: A type of the first symbol is on the subband, and the type of the first symbol is configured as flexible through a cell-level TDD configuration, or is configured as flexible through a cell-level TDD configuration and a terminal-level TDD configuration, but the terminal device is configured through RRC to send or receive a signal on the first symbol by using the subband; or a symbol type corresponding to the subband on the first symbol is not configured, and the terminal device is configured through RRC to send or receive a signal on the first symbol by using the subband.

Further, optionally, if the reference subband is configured via RRC on a third time domain resource to receive the first signal, and the first subband is configured via RRC on a fourth time domain resource to send an SRS, the SRS is not sent on the second time domain resource by using the first subband; or if the reference subband is configured via RRC on a third time domain resource to receive or send the first signal, and the first subband is configured via RRC, on a fourth time domain resource, to receive or send the second signal, the second signal is not received or sent by using the first subband on the third time domain resource, where the second time domain resource is an overlapping part of the third time domain resource and the fourth time domain resource. For example, the second time domain resource is a first symbol. It may be understood that a reference subband is configured on the first symbol, the first signal is received on the first symbol only by using the reference subband, and the SRS is not sent on the first symbol by using the reference subband. However, an SRS may still be sent on a symbol other than the first symbol in the time domain resource occupied by the SRS, that is, transmission of some SRSs is allowed.

It may be understood that, when the first signal is transmitted across subbands, a subband on which the first signal is located includes a reference subband and a third subband, and the third subband is a subband in the second subbands. In this case, the terminal device using the half-duplex communication mode may receive or send the first signal on the second time domain resource by using the reference subband and the third subband, and does not receive or send the second signal on the second time domain resource by using the first subband. For example, in FIG. 8B, the first frequency domain resource includes three subbands without a guard interval, the first signal is transmitted across subbands, the first signal is configured to be transmitted on the 1st subband and the 3rd subband, and the second signal is configured to be transmitted on the 2nd subband. Transmission directions of the first signal and the second signal are opposite. Although the first signal and the second signal occupy different subbands, there is an intersection between time domain resources occupied by the first signal and the second signal. The second subbands include the 1st subband, the 2nd subband, and the 3rd subband. The 1st subband has a smallest index, and is a reference subband. The first signal is received or sent on the 1st subband and the 3rd subband according to a collision handling rule.

It may be understood that when the second signal is transmitted across subbands, the first subband in the foregoing handling manner refers to a plurality of subbands on which the second signal is located.

In another optional manner, receiving may be selected by default, for example, a subband that is in a plurality of subbands and that is configured to receive a signal is selected by default to receive a signal; or sending may be selected by default, for example, a subband that is in a plurality of subbands and that is configured to send a signal is selected by default to send a signal.

In addition, optionally, for the terminal device using the half-duplex communication mode, a collision handling manner performed by the terminal device for the scenario 1 may be summarized as a first collision handling rule. The scenario 1 means that a plurality of signals are configured, on a same time domain resource, to be transmitted by RRC, a frequency domain resource occupied by each of the plurality of signals is a frequency domain resource on one subband, and different signals are located on different subbands. For the terminal device using the half-duplex communication mode, a second collision handling rule may be applied to another handling case in case 1 except the foregoing scenario 1. The second collision handling rule may include but is not limited to at least one of the following handling manners:

When one group of symbols in one slot is configured as flexible through a cell-level TDD configuration, or configured as flexible through a cell-level TDD configuration and a terminal device-level TDD configuration, the terminal device does not expect to receive, on the group of symbols, both higher layer signaling (for example, RRC) used to configure the terminal device to send a signal and higher layer signaling used to configure the terminal device to receive a signal.

Alternatively, when the access network device configures, on one carrier in an unpaired spectrum by using ssb-PositionsInBurst in a system information block 1 (system information block1, SIB1) information element or ssb-PositionsInBurst in a ServingCellConfigCommon information element, the terminal device to receive an SSB on one group of symbols in one slot, if a symbol on which a physical uplink shared channel (physical uplink share channel, PUSCH), a physical uplink control channel (physical uplink control channel, PUCCH), or a PRACH is located partially or completely overlaps the group of symbols, the terminal device does not send the PUSCH, the PUCCH, or the PRACH in the slot, and the terminal device does not send the SRS on the group of symbols.

Alternatively, when one group of symbols in one slot includes a symbol on which a valid PRACH occasion is located and $N_{gap}$ symbols before the symbol on which the valid PRACH occasion is located, where $N_{gap}$ is an integer greater than or equal to 0, if a symbol on which a PDCCH, a physical downlink shared channel (physical downlink share channel, PDSCH), or channel state information reference signal (channel state information reference signal, CSI-RS) is located partially or completely overlaps the group of symbols, the terminal device cancels receiving the signal.

Optionally, the second collision handling rule may further include another collision handling manner. For example, refer to a related collision handling rule in clause 11 in the 3GPP protocol 38.213 version g60.

E2: The terminal device using the subband full-duplex communication mode supports a case in which a signal can be simultaneously received and sent on a plurality of frequency domain resources.

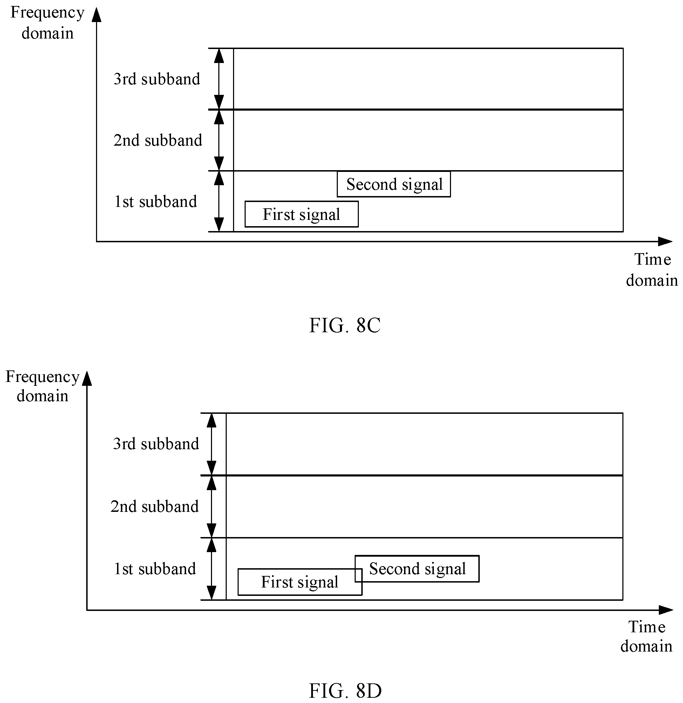

In a possible design, there is no intersection between the plurality of frequency domain resources. Optionally, the plurality of frequency domain resources may be frequency domain resources on a plurality of subbands. For example, FIG. 8A/FIG. 8B shows a case in which signal transmission is configured on a plurality of subbands. Alternatively, optionally, the plurality of frequency domain resources may be a plurality of frequency domain resources that do not have an intersection on one subband. For example, FIG. 8C shows a case in which signal transmission is configured on a plurality of frequency domain resource on one subband. The first frequency domain resource includes three subbands without a guard interval. Two signals, namely, the first signal and the second signal, are configured to be transmitted on the 1st subband. There is no intersection between frequency domain resources occupied by the first signal and the second signal. In other words, frequency domain resources occupied by the first signal and the second signal do not overlap, and there is an intersection between time domain resources occupied by the first signal and the second signal.

The following uses an example to describe a case in which signal transmission configurations corresponding to a plurality of signals exist on one subband, and frequency domain resources occupied by the plurality of signals in a same subband do not have an intersection. For example, a second frequency domain resource on a subband is configured to send the first signal, and a third frequency domain resource on the subband is configured to receive the second signal. If there is no intersection between the second frequency domain resource and the third frequency domain resource, or the second frequency domain resource and the third frequency domain resource do not overlap, the terminal device using the subband full-duplex communication mode may simultaneously send the first signal on the second frequency domain resource and receive the second signal on the third frequency domain resource.

Transmission directions of the first signal and the second signal are different. The transmission direction of the first signal may be determined based on a symbol type configuration corresponding to the second frequency domain resource on which the first signal is located, or may be determined based on a transmission direction corresponding to signal transmission configured on the second frequency domain resource. Similarly, the transmission direction of the second signal may be determined by a symbol type configuration corresponding to the third frequency domain resource on which the second signal is located, or may be determined by a transmission direction corresponding to signal transmission configured on the third frequency domain resource. This is not limited in embodiments of this application. For example, Table 5 shows a plurality of cases in which a signal is configured to be transmitted on the first subband and the second subband, and each case corresponds to an actual signal transmission behavior on a same time domain resource.

**Table 5**

| First subband | Second subband | Actual signal transmission behavior on a same time domain resource |
|---|---|---|
| RRC-D/RRC-U | RRC-U/RRC-D | RRC-D and RRC-U transmission |
| Dynamic D/Dynamic U | Dynamic U/Dynamic D | Dynamic D and Dynamic U transmission |
| RRC-U | Dynamic D | RRC-U and Dynamic D transmission |
| RRC-D | Dynamic U | RRC-D and Dynamic U transmission |
| SSB | Any-U | All perform transmission |
| Valid PRACH | Any-D | All perform transmission |
| PDCCH | Dynamic U | All perform transmission |

RRC-D indicates that the terminal device is configured, through RRC, to receive a signal, and RRC-U indicates that the terminal device is configured, through RRC, to send a signal.

Dynamic D indicates that DCI indicates the terminal device to receive a signal, and Dynamic U indicates that DCI indicates the terminal device to send a signal.

A transmission direction corresponding to an SSB is downlink. As described above, the SSB is a synchronization signal block, or is referred to as a synchronization signal and physical broadcast channel block (synchronization signal/PBCH block, SS/PBCH block). The PBCH is a physical broadcast channel (physical broadcast channel, PBCH).

The Valid PRACH is a valid physical random access channel, and a transmission direction corresponding to the Valid PRACH is uplink.

A transmission direction corresponding to the PDCCH is downlink.

Any-U means that the terminal device is configured, through RRC, to send a signal, or DCI indicates the terminal device to send a signal. Any-D means that the terminal device is configured, through RRC, to receive a signal, or DCI indicates the terminal device to receive a signal.

In addition, it should be noted that, the solution described in the foregoing possible design may also be applicable to a case in which signal transmission is configured on a plurality of subbands but transmission directions are different. The terminal device using the subband full-duplex communication mode may simultaneously transmit signals on the plurality of subbands.

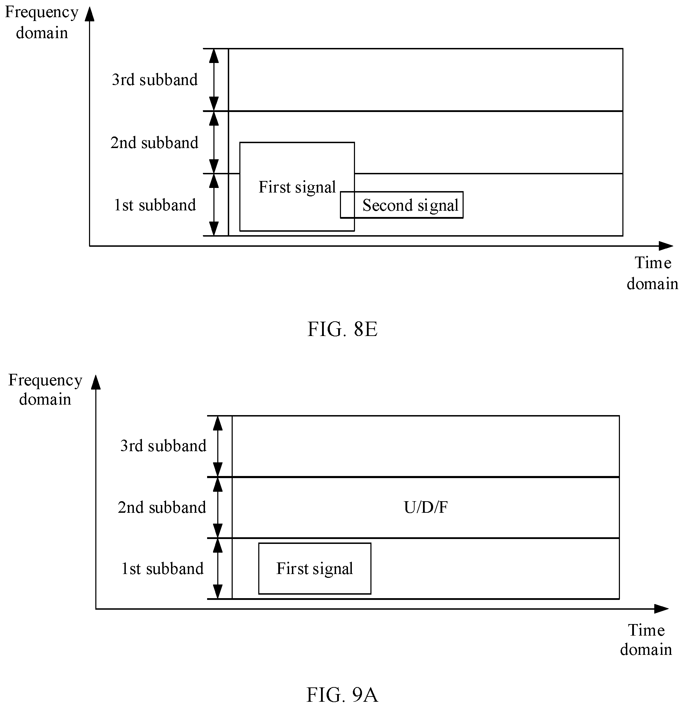

In another possible design, there is an intersection between a plurality of frequency domain resources. For example, the plurality of frequency domain resources may be a plurality of frequency domain resources that have an intersection on one subband. FIG. 8D shows that the first frequency domain resource includes three subbands without a guard interval. Two signals, namely, the first signal and the second signal, are configured to be transmitted on the 1st subband. Transmission directions of the first signal and the second signal are different. There is an intersection between a frequency domain resource occupied by the first signal and a frequency domain resource occupied by the second signal. In other words, the frequency domain resources occupied by the first signal and the second signal overlap. For another example, the plurality of frequency domain resources are not limited to one subband, and there is a frequency domain resource located on one subband, or there may be a frequency domain resource beyond a frequency domain range of one subband. FIG. 8E shows that a first frequency domain resource includes three subbands without a guard interval, and a first signal and a second signal are configured to be transmitted. Transmission directions of the first signal and the second signal are different. A frequency domain resource occupied by the first signal exceeds the 1st subband, and further includes a part of frequency domain resource corresponding to the 2nd subband. The frequency domain resource occupied by the second signal is located on the 1st subband. There is an intersection between the frequency domain resource occupied by the first signal and the frequency domain resource occupied by the second signal. In other words, frequency domain resources occupied by the first signal and the second signal overlap.

Specifically, for example, on a same time domain resource, transmission directions for transmitting the first signal and the second signal are configured to be different, and there is an intersection between the frequency domain resource occupied by the first signal and the frequency domain resource occupied by the second signal. The terminal device using the subband full-duplex communication mode may determine, according to a third collision handling rule, actually performed signal transmission. The third collision handling rule may be specifically a fourth collision handling rule or the second collision handling rule.

The fourth collision handling rule may be understood as a collision handling rule performed by the terminal device using the subband full-duplex communication mode for the scenario 2. Scenario 2 means that both the first signal and the second signal are signals transmitted through an RRC configuration. The fourth collision handling rule is as follows: In the scenario 2, the terminal device using the subband full-duplex communication mode may send a signal or receive a signal in a predefined or default transmission manner. For example, the predefined or default transmission manner is sending a signal. When a first signal is configured to be sent and the second signal is configured to be received on a subband, the terminal device using the subband full-duplex communication mode sends the first signal on a same time domain resource only by using the subband. Alternatively, the predefined or default transmission mode is receiving a signal. When the first signal is configured to be sent and the second signal is configured to be received on the subband, the terminal device using the subband full-duplex communication mode receives the second signal on a same time domain resource by using only the subband.

For the terminal device using the subband full-duplex communication mode, the second collision handling rule may be applied to another handling case other than the scenario 2 when two signals have an intersection in frequency domain in case 1. For a handling manner included in the second collision handling rule, refer to the foregoing description in E1 for understanding. Details are not described in this embodiment of this application again.

E3: The terminal device using the full-duplex communication mode supports a case in which a signal can be simultaneously received and sent on a same time-frequency resource.

Specifically, for example, a first signal and a second signal are configured to be transmitted on one subband. The terminal device using the full-duplex communication mode may determine, according to the following fifth collision handling rule, signal transmission actually performed on the subband. The fifth collision handling rule may be specifically the following sixth collision handling rule or the foregoing second collision handling rule.

The sixth collision handling rule may be understood as a collision handling rule performed by the terminal device using the full-duplex communication mode for the scenario 3. Scenario 3: If a time-frequency resource 1 is configured to send or receive a first signal, a time-frequency resource 2 is configured to receive or send a second signal, and transmission directions of the first signal and the second signal are opposite, the terminal device using the full-duplex communication mode may simultaneously send or receive the first signal on the time-frequency resource 1, or may receive or send the second signal on the time-frequency resource 2. The time-frequency resource 1 and the time-frequency resource 2 may have an intersection in time domain and/or an intersection in frequency domain. For example, a frequency domain resource of a time-frequency resource 1 and a frequency domain resource of a time-frequency resource 2 have an intersection, and are both on one subband. FIG. 8D shows that the first frequency domain resource includes three subbands without a guard interval. Two signals, namely, the first signal and the second signal, are configured to be transmitted on the 1st subband. A frequency domain resource (namely, the frequency domain resource 1) occupied by the first signal and a frequency domain resource (namely, the frequency domain resource 2) occupied by the second signal have an intersection. In other words, frequency domain resources occupied by the first signal and the second signal overlap.

For the terminal device using the full-duplex communication mode, a second collision handling rule may be applied to another handling case in case 1 except the foregoing scenario 3. For a handling manner included in the second collision handling rule, refer to the foregoing description in E1 for understanding. Details are not described in this embodiment of this application again.

Case 2: There is a collision between configured signal transmission and a symbol type configuration on a time-frequency resource occupied for signal transmission.

Specifically, the configured signal transmission may be signal transmission configured on a subband on the first frequency domain resource. In this case, collision handling may be performed according to a solution described in F1. Alternatively, a signal is configured to be transmitted, and a time-frequency resource occupied by the signal overlaps at least two subbands in the first frequency domain resource. In this case, collision handling may be performed according to a solution described in F2.

It should be noted that a communication mode used by the terminal device is not limited in Case 2. Case 2 is applicable to a terminal device in a plurality of communication modes, for example, may be a terminal device using a half-duplex communication mode, a terminal device using a subband full-duplex communication mode, or a terminal device using a full-duplex communication mode.

F1: For one or more signals configured to be transmitted on one subband, the terminal device may determine, on the subband according to the foregoing second collision handling rule, actually performed signal transmission. For a handling manner included in the second collision handling rule, refer to the foregoing description in E1 for understanding. Details are not described in this embodiment of this application again.

In addition, it may be understood that a configuration for a transmission direction of configuration signal transmission on one subband is not affected by a symbol type configuration on another subband. For example, it is assumed that the first frequency domain resource includes a subband 1 and a subband 2. The subband 1 may be configured to send the first signal on the first symbol, and is not affected by a symbol type corresponding to the subband 2 on the first symbol. It may be understood that the symbol type corresponding to the subband 2 on the first symbol may be uplink, downlink, or flexible. A symbol type corresponding to the subband 1 on the first symbol is not configured, or is configured as uplink/flexible. Similarly, alternatively, the subband 1 may be configured to receive the second signal on the first symbol, and is not affected by the symbol type corresponding to the subband 2 on the first symbol. It may be understood that the symbol type corresponding to the subband 2 on the first symbol may be uplink, downlink, or flexible. The symbol type corresponding to the subband 1 on the first symbol is not configured, or is configured as downlink/flexible. FIG. 9A shows that the first frequency domain resource includes three subbands without a guard interval, and the first signal is configured to be transmitted on the 1st subband (corresponding to the subband 1). A symbol type corresponding to the 2nd subband (corresponding to the subband 2) is uplink (U), downlink (D), or flexible (F).

F2: A signal is configured to be transmitted, where a time-frequency resource occupied by the signal overlaps at least two subbands in the first frequency domain resource, one or more signals configured to be transmitted include a special signal, and a time-frequency resource occupied by the special signal is denoted as a first time-frequency resource. If there is an overlapping part of a frequency domain resource corresponding to the first time-frequency resource and at least two subbands in the first frequency domain resource, and symbol types corresponding to some or all of the at least two subbands on at least one symbol in a fifth time domain resource are opposite to a transmission direction of the special signal, the special signal is transmitted on the first time-frequency resource. The first time domain resource includes a symbol occupied by the first time-frequency resource. That a symbol type corresponding to the at least one symbol is opposite to the transmission direction of the special signal includes: The type of the at least one symbol is uplink, and the transmission direction of the special signal is downlink; or the type of the at least one symbol is downlink, and the transmission direction of the special signal is uplink.

For example, the special signal may be a PRACH, or referred to as a PRACH signal. The terminal device may send a PRACH signal on the first time-frequency resource, where the first time-frequency resource is specifically a time-frequency resource in which one or more valid PRACH occasions are located.

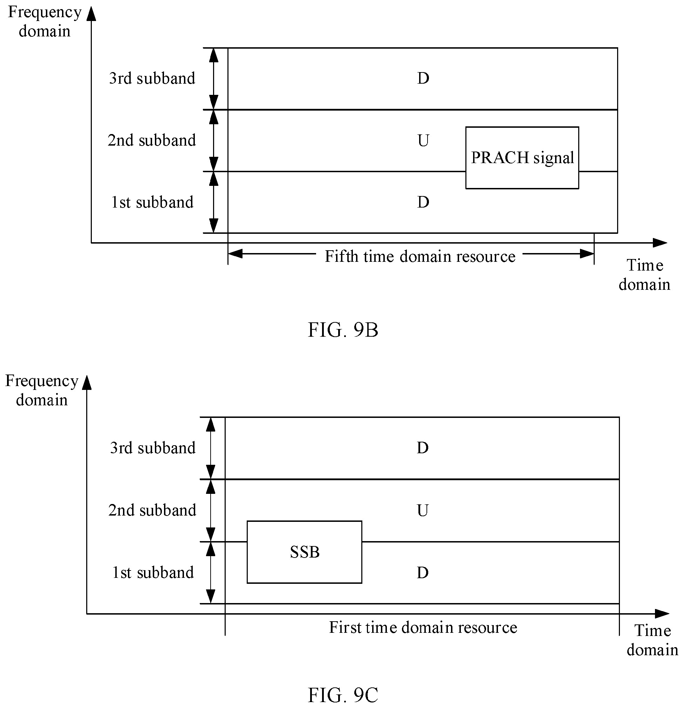

Specifically, there is the overlapping part of the frequency domain resource corresponding to the first time-frequency resource and the at least two subbands in the first frequency domain resource, and symbol types corresponding to some or all of the at least two subbands on at least one symbol in the fifth time domain resource are downlink, and the fifth time domain resource includes a symbol occupied by the first time-frequency resource and $N_{gap}$ symbols before the first time-frequency resource, where $N_{gap}$ is an integer greater than or equal to 0. There may be an intersection or no intersection between the fifth time domain resource and the first time domain resource. For example, the fifth time domain resource may be some time domain resources on the first time domain resource, for example, a slot. This is not limited in embodiments of this application. For example, FIG. 9B shows that the first frequency domain resource includes three subbands without a guard interval. A symbol type corresponding to the subband 1 on the fifth time domain resource is D, a symbol type corresponding to the subband 2 on the fifth time domain resource is U, and a symbol type corresponding to the subband 3 on the fifth time domain resource is D. A first time-frequency resource occupied by the PRACH signal overlaps the 1st subband and the 2nd subband, and symbols occupied by the first time-frequency resource are some symbols on the fifth time domain resource.

For example, the special signal may be an SSB or a type-0 PDCCH signal. The terminal device may receive the SSB or the type-0 PDCCH signal on the first time-frequency resource.

There is an overlapping part of a frequency domain resource corresponding to the first time-frequency resource and at least two subbands in the first frequency domain resource, a symbol type of at least one symbol in a fifth time domain resource corresponding to some or all of the at least two subbands is an uplink symbol, and the fifth time domain resource includes a symbol occupied by the first time-frequency resource. There may be an intersection or no intersection between the fifth time domain resource and the first time domain resource. For example, the fifth time domain resource may be some time domain resources on the first time domain resource, for example, a slot. This is not limited in embodiments of this application. For example, FIG. 9C shows that the first frequency domain resource includes three subbands without a guard interval, a symbol type corresponding to a subband 1 on a fifth time domain resource is D, a symbol type corresponding to a subband 2 on the fifth time domain resource is U, and a symbol type corresponding to a subband 3 on the fifth time domain resource is D. A first time-frequency resource occupied by the SSB overlaps the 1st subband and the 2nd subband, symbols occupied by the first time-frequency resource are some symbols on the fifth time domain resource.

Further, for configuration transmission of a signal other than the special signal described in F2, a time-frequency resource occupied by one another signal may also overlap at least two subbands in the first frequency domain resource. For configuration transmission of a signal other than a special signal, this embodiment of this application further provides some collision handling manners. It should be noted that, for a collision in transmission of another signal configuration, there is a collision between signal transmission and a symbol type configuration described in the foregoing case 2. A collision handling manner provided in this embodiment of this application is applicable to a collision between a plurality of signal transmissions and a collision between signal transmission and a symbol type configuration.

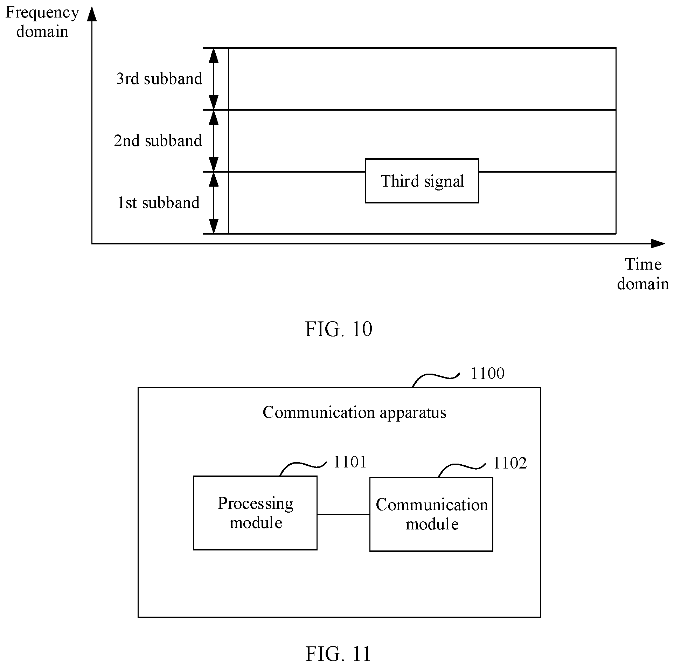

A possible configuration for another signal is first described with reference to FIG. 10. For example, FIG. 10 shows that the first frequency domain resource includes three subbands without a guard interval. A frequency domain resource occupied by a third signal overlaps the 1st subband and the 2nd subband.

Specifically, the terminal device may perform collision handling related to other signal configuration and transmission with reference to the following solution described in G1 or G2. The G1 or G2 collision handling rule is applicable to terminal devices in a plurality of communication modes, for example, may be a terminal device using a half-duplex communication mode, a terminal device using a subband full-duplex communication mode, or a terminal device using a full-duplex communication mode.

G1: When a time-frequency resource occupied by another signal overlaps at least two subbands in the first frequency domain resource, the terminal device may separately determine, on each of the at least two subbands according to the second collision handling rule, a time domain resource that corresponds to each subband and that can be used to receive or send a signal. For ease of understanding, a time domain resource that can receive a signal is referred to as receiving time for short, and a time domain resource that can send a signal is referred to as sending time for short. Then, the terminal device may receive another signal based on an intersection set of receiving times corresponding to the subbands, or the terminal device may send another signal based on an intersection set of sending time and receiving time corresponding to the subbands.

G2: When a time-frequency resource occupied by another signal overlaps at least two subbands in the first frequency domain resource, the terminal device may separately determine, on each of the at least two subbands according to the second collision handling rule, a time domain resource that corresponds to each subband and that can be used to receive or send a signal. For ease of understanding, a time domain resource that can receive a signal is referred to as receiving time for short, and a time domain resource that can send a signal is referred to as sending time for short. Then, the terminal device may receive another signal on each subband based on a receiving time corresponding to each subband, or the terminal device may send another signal on each subband based on sending and receiving time corresponding to each subband.

Based on the same concept, refer to FIG. 11. An embodiment of this application provides a communication apparatus 1100. The communication apparatus 1100 includes a processing module 1101 and a communication module 1102. The communication apparatus 1100 may be a terminal device, or may be a communication apparatus that is used in a terminal device or that can be used together with a terminal device and that can implement a method performed on a terminal device side. Alternatively, the communication apparatus 1100 may be an access network device, or may be a communication apparatus that is used in an access network device or that can be used together with an access network device and that can implement a method performed on an access network device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, a device that is in the communication module and that is configured to implement a receiving function may be considered as a receiving unit. It should be understood that the communication module is configured to perform a sending operation and a receiving operation on the access network device side or the terminal device side in the foregoing method embodiments, and a device that is in the communication module and that is configured to implement a sending function is considered as a sending unit. In other words, the communication module includes the receiving unit and the sending unit.

When the communication apparatus 1100 is used in a terminal device, the receiving unit included in the communication module 1102 of the communication apparatus 1100 is configured to perform a receiving operation on the terminal device side, for example, receive information from the access network device. The sending unit included in the communication module 1102 of the communication apparatus 1100 is configured to perform a sending operation on the terminal device side, for example, send information to the access network device. When the communication apparatus 1100 is used in an access network device, the receiving unit included in the communication module 1102 of the communication apparatus 1100 is configured to perform the receiving operation on the access network device side, for example, receive information from a terminal device; and the sending unit included in the communication module 1102 of the communication apparatus 1100 is configured to perform the sending operation on the access network device side, for example, send information to a terminal device.

In addition, it should be noted that, if the apparatus is implemented by using a chip/chip circuit, the communication module may be an input/output circuit and/or a communication interface, and performs an input operation (which corresponds to the foregoing receiving operation) and an output operation (which corresponds to the foregoing sending operation). The processing module is an integrated processor, a microprocessor, or an integrated circuit.

The following describes in detail an implementation in which the communication apparatus 1100 is used in the terminal device.

A communication module is configured to obtain first information, where the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource.

A processing module is configured to send a signal and/or receive a signal through the first frequency domain resource based on the first information.

In an optional implementation, the first information includes N indexes, one of the N indexes indicates a slot format corresponding to one of the M subbands in at least one slot in the first time domain resource, the slot format indicates a symbol type of each symbol in one slot, and N is a positive integer less than or equal to M; or the first information includes one index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M.

In an optional implementation, the communication apparatus in the third aspect is used in a terminal device using a half-duplex communication mode, and the communication module is further configured to: if a reference subband is configured to receive or send a first signal on a second time domain resource, a first subband is configured to receive or send a second signal on the second time domain resource, and transmission directions of the first signal and the second signal are opposite, receive or send the first signal on the second time domain resource by using the reference subband, and skip receiving or sending the second signal on the second time domain resource by using the first subband.

In an optional implementation, the reference subband is a subband with a smallest subband index in second subbands, the second subbands include the reference subband and the first subband, and any one of the second subbands is configured to send or receive a signal on the second time domain resource; or the reference subband is a predefined subband.

In an optional implementation, the communication module is further configured to: if the reference subband is configured via RRC on a third time domain resource to receive the first signal, and the first subband is configured via RRC on a fourth time domain resource to send an SRS, not send the SRS on the second time domain resource by using the first subband, where the second time domain resource is an overlapping part of the third time domain resource and the fourth time domain resource.

In an optional implementation, further configured to: if the reference subband is configured via RRC on a third time domain resource to receive or send the first signal, and the first subband is configured via RRC on a fourth time domain resource to receive or send the second signal, not receive or send the second signal by using the first subband on the third time domain resource, where the second time domain resource is an overlapping part of the third time domain resource and the fourth time domain resource.

In an optional implementation, the communication module is further configured to: send a PRACH signal on a first time-frequency resource, where the first time-frequency resource is a time-frequency resource in which one or more valid PRACH occasions are located, a frequency domain resource corresponding to the first time-frequency resource overlaps the at least two subbands in the first frequency domain resource, and symbol types corresponding to some or all of the at least two subbands on at least one symbol in a fifth time domain resource are downlink, and the fifth time domain resource includes a symbol occupied by the first time-frequency resource and $N_{gap}$ symbols before the first time-frequency resource, where $N_{gap}$ is an integer greater than or equal to 0.

In an optional implementation, the communication module is further configured to:

receive an SSB or a type-0 PDCCH signal on a first time-frequency resource, where a frequency domain resource corresponding to the first time-frequency resource overlaps the at least two subbands in the first frequency domain resource, symbol types corresponding to some or all of the at least two subbands on at least one symbol in a fifth time domain resource are uplink symbols, and the fifth time domain resource includes a symbol occupied by the first time-frequency resource.

The following describes in detail an implementation in which the communication apparatus 1100 is used in the access network device.

The processing module is configured to generate first information, where the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource; and the communication module is configured to send the first information.

In an optional implementation, the first information includes N indexes, one of the N indexes indicates a slot format corresponding to one of the M subbands in at least one slot in the first time domain resource, the slot format indicates a symbol type of each symbol in one slot, and N is a positive integer less than or equal to M; or the first information includes one index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M.

Division into the modules in embodiments of this application is an example, is only division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Based on a same technical concept, an embodiment of this application further provides a communication apparatus 1200. The communication apparatus 1200 may be a chip or a chip system. Optionally, in embodiments of this application, the chip system may include a chip, or may include a chip and another discrete device.

The communication apparatus 1200 may be configured to implement a function of any network element in the communication system shown in FIG. 1. The communication apparatus 1200 may include at least one processor 1210. The processor 1210 is coupled to a memory. Optionally, the memory may be located in the apparatus, the memory may be integrated with the processor, or the memory may be located outside the apparatus. For example, the communication apparatus 1200 may further include at least one memory 1220. The memory 1220 stores a computer program, configuration information, a computer program, instructions, and/or data that are/is necessary for implementing any one of the foregoing embodiments. The processor 1210 may execute the computer program stored in the memory 1220, to complete the method in any one of the foregoing embodiments.

The communication apparatus 1200 may further include a communication interface 1230, and the communication apparatus 1200 may perform information exchange with another device through the communication interface 1230. For example, the communication interface 1230 may be a transceiver, a circuit, a bus, a module, a pin, or another type of communication interface. When the communication apparatus 1200 is a chip apparatus or a circuit, the communication interface 1230 in the apparatus 1200 may also be an input/output circuit, and may input information (or referred to as receiving information) and output information (or referred to as sending information). The processor is an integrated processor, a microprocessor, an integrated circuit, or a logic circuit. The processor may determine output information based on input information.

The coupling in embodiments of this application may be an indirect coupling or a communication connection between apparatuses, units, or modules in an electrical form, a mechanical form, or another form, and is used for information exchange between the apparatuses, the units, or the modules. The processor 1210 may cooperate with the memory 1220 and the communication interface 1230. A specific connection medium between the processor 1210, the memory 1220, and the communication interface 1230 is not limited in embodiments of this application.

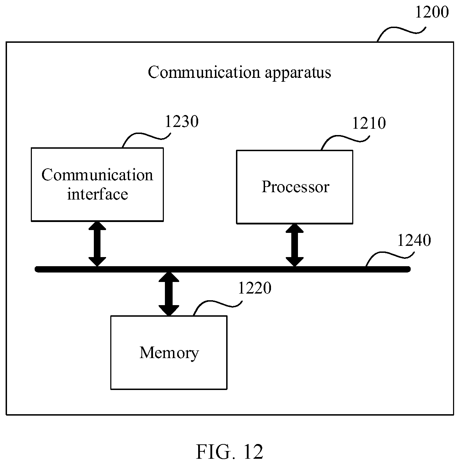

Optionally, with reference to FIG. 12, the processor 1210, the memory 1220, and the communication interface 1230 are connected to each other by using a bus 1240. The bus 1240 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line indicates the bus in FIG. 12, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware assembly, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by a combination of hardware and software modules in the processor.

In embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

In a possible implementation, the communication apparatus 1200 may be used in a terminal device. Specifically, the communication apparatus 1200 may be a terminal device, or may be an apparatus that can support a terminal device in implementing a function of the terminal device in any one of the foregoing embodiments. The memory 1220 stores a necessary computer program, a computer program, instructions and/or data for implementing the function of the terminal device in any one of the foregoing embodiments. The processor 1210 may execute the computer program stored in the memory 1220, to complete the method performed by the terminal device in any one of the foregoing embodiments. Used in the terminal device, the communication interface in the communication apparatus 1200 may be configured to interact with an access network device, and send a signal to the access network device or receive a signal from the access network device.

In another possible implementation, the communication apparatus 1200 may be used in an access network device. Specifically, the communication apparatus 1200 may be an access network device, or may be an apparatus that can support an access network device in implementing a function of the access network device in any one of the foregoing embodiments. The memory 1220 stores a necessary computer program, a computer program, instructions and/or data for implementing the function of the access network device in any one of the foregoing embodiments. The processor 1210 may execute the computer program stored in the memory 1220, to complete the method performed by the access network device in any one of the foregoing embodiments. Used in the access network device, a communication interface in the communication apparatus 1200 may be configured to interact with a terminal device, and send a signal to the terminal device or receive a signal from the terminal device.

The communication apparatus 1200 provided in this embodiment is used in the terminal device to complete the method performed by the terminal device, or is used in the access network device to complete the method performed by the access network device. Therefore, for the technical effect that can be obtained by the communication apparatus 1200, refer to the foregoing method embodiments. Details are not described herein again.

Based on the foregoing embodiments, an embodiment of this application further provides a computer program. When the computer program is run on a computer, the computer is enabled to perform, from a perspective of a terminal device side or an access network device side, the method provided in the embodiment shown in FIG. 4.

Based on the foregoing embodiments, an embodiment of this application further provides a computer-readable storage medium. The computer-readable storage medium stores a computer program. When the computer program is executed by a computer, the computer is enabled to perform, from a perspective of a terminal device side or an access network device side, the method provided in the embodiment shown in FIG. 4. The storage medium may be any usable medium that can be accessed by the computer. The following is used as an example but is not limited: The computer-readable medium may include a RAM, a read-only memory (read-only memory, ROM), an electrically erasable programmable read-only memory (electrically erasable programmable read-only memory, EEPROM), a CD-ROM or other optical disk storage, a magnetic disk storage medium or another magnetic storage device, or any other medium that can be used to carry or store expected program code in a form of an instruction or a data structure and can be accessed by a computer.

Based on the foregoing embodiments, an embodiment of this application provides a communication system, including a terminal device and an access network device. The terminal device and the access network device may implement the method provided in the embodiment shown in FIG. 4.

Based on the foregoing embodiments, an embodiment of this application further provides a chip. The chip is configured to read a computer program stored in a memory, and implement, from a perspective of a terminal device side or an access network device side, the method provided in the embodiment shown in FIG. 4.

Based on the foregoing embodiments, an embodiment of this application provides a chip system. The chip system includes a processor, configured to support a computer apparatus in implementing functions of a transmit end or a receive end in the embodiment shown in FIG. 4. In a possible design, the chip system further includes a memory, and the memory is configured to store a program and data that are necessary for the computer apparatus. The chip system may include a chip, or may include a chip and another discrete device.

All or some of the technical solutions provided in this disclosure may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this disclosure are all or partially generated. The computer may be a general-purpose computer, a dedicated computer, a computer network, an access network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this disclosure, when there is no logical conflict, embodiments may be mutually referenced. For example, methods and/or terms in the method embodiments may be mutually referenced. For example, functions and/or terms in the apparatus embodiments may be mutually referenced. For example, functions and/or terms between the apparatus embodiments and the method embodiments may be mutually referenced.

It is clearly that, a person skilled in the art can make various modifications and variations to this disclosure without departing from the scope of this disclosure. This disclosure is intended to cover these modifications and variations of this disclosure provided that they fall within the scope of protection defined by the following claims and their equivalent technologies.

**Claims**

**1.** A communication method, comprising:

obtaining first information, wherein the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource; and

sending a signal and/or receiving a signal through the first frequency domain resource based on the first information.

2. The communication method according to claim 1, wherein the first frequency domain resource is a frequency domain resource occupied by one carrier.

3. The communication method according to claim 1 or 2, wherein

the first information comprises N indexes, one of the N indexes indicates a slot format corresponding to one of the M subbands in at least one slot in the first time domain resource, the slot format indicates a symbol type of each symbol in one slot, and N is a positive integer less than or equal to M; or

the first information comprises one index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M.

4. The communication method according to any one of claims 1 to 3, wherein the communication method is applied to a terminal device using a half-duplex communication mode, and the sending a signal and/or receiving a signal through the first frequency domain resource comprises:

if a reference subband is configured to receive or send a first signal on a second time domain resource, a first subband is configured to receive or send a second signal on the second time domain resource, and transmission directions of the first signal and the second signal are opposite, receiving or sending the first signal on the second time domain resource by using the reference subband, and skipping receiving or sending the second signal on the second time domain resource by using the first subband.

5. The communication method according to claim 4, wherein

the reference subband is a subband with a smallest subband index in second subbands, the second subbands comprise the reference subband and the first subband, and any one of the second subbands is configured to send or receive a signal on the second time domain resource; or

the reference subband is a predefined subband.

6. The communication method according to claim 4 or 5, wherein the communication method further comprises:

if the reference subband is configured via radio resource control RRC to receive the first signal on a third time domain resource, and the first subband is configured via RRC to send a sounding reference signal SRS on a fourth time domain resource, skipping sending the SRS on the second time domain resource by using the first subband, wherein the second time domain resource is an overlapping part of the third time domain resource and the fourth time domain resource; or

if the reference subband is configured in radio resource control RRC to receive or send the first signal on a third time domain resource, and the first subband is configured via RRC to receive or send the second signal on a fourth time domain resource, skipping receiving or sending the second signal on the third time domain resource by using the first subband, wherein the second time domain resource is an overlapping part of the third time domain resource and the fourth time domain resource.

7. The communication method according to any one of claims 1 to 3, wherein the sending a signal and/or receiving a signal through the first frequency domain resource comprises:

sending a physical random access channel PRACH signal on a first time-frequency resource, wherein the first time-frequency resource is a time-frequency resource in which one or more valid PRACH occasions are located, a frequency domain resource corresponding to the first time-frequency resource overlaps the at least two subbands in the first frequency domain resource, and symbol types corresponding to some or all of the at least two subbands on at least one symbol in a fifth time domain resource are downlink, and the fifth time domain resource comprises a symbol occupied by the first time-frequency resource and $N_{gap}$ symbols before the first time-frequency resource, wherein $N_{gap}$ is an integer greater than or equal to 0.

8. The communication method according to any one of claims 1 to 3, wherein the sending a signal and/or receiving a signal through the first frequency domain resource comprises:
receiving a synchronization signal block SSB or a type-0 physical downlink control channel PDCCH signal on a first time-frequency resource, wherein a frequency domain resource corresponding to the first time-frequency resource overlaps the at least two subbands in the first frequency domain resource, symbol types corresponding to some or all of the at least two subbands on at least one symbol in a fifth time domain resource are uplink symbols, and the fifth time domain resource comprises a symbol occupied by the first time-frequency resource.

9. A communication method, comprising:

generating first information, wherein the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource; and
sending the first information.

10. The communication method according to claim 9, wherein the first frequency domain resource is a frequency domain resource occupied by one carrier.

11. The communication method according to claim 9 or 10, wherein

the first information comprises N indexes, one of the N indexes indicates a slot format corresponding to one of the M subbands in at least one slot in the first time domain resource, the slot format indicates a symbol type of each symbol in one slot, and N is a positive integer less than or equal to M; or
the first information comprises one index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M.

12. A communication apparatus, comprising:

a communication module, configured to obtain first information, wherein the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource; and
a processing module, configured to send a signal and/or receive a signal through the first frequency domain resource based on the first information.

13. The communication apparatus according to claim 12, wherein the first frequency domain resource is a frequency domain resource occupied by one carrier.

14. The communication apparatus according to claim 12 or 13, wherein

the first information comprises N indexes, one of the N indexes indicates a slot format corresponding to one of the M subbands in at least one slot in the first time domain resource, the slot format indicates a symbol type of each symbol in one slot, and N is a positive integer less than or equal to M; or
the first information comprises one index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M.

15. The communication apparatus according to any one of claims 12 to 14, wherein the communication apparatus is used in a terminal device using a half-duplex communication mode, and the communication module is further configured to:
if a reference subband is configured to receive or send a first signal on a second time domain resource, a first subband is configured to receive or send a second signal on the second time domain resource, and transmission directions of the first signal and the second signal are opposite, receive or send the first signal on the second time domain resource by using the reference subband, and skip receiving or sending the second signal on the second time domain resource by using the first subband.

16. The communication apparatus according to claim 15, wherein

the reference subband is a subband with a smallest subband index in second subbands, the second subbands comprise the reference subband and the first subband, and any one of the second subbands is configured to send or receive a signal on the second time domain resource; or
the reference subband is a predefined subband.

17. The communication apparatus according to claim 15 or 16, wherein the communication module is further configured to:

if the reference subband is configured in radio resource control RRC to receive the first signal on a third time domain resource, and the first subband is configured via RRC to send a sounding reference signal SRS on a fourth time domain resource, skip sending the SRS on the second time domain resource by using the first subband, wherein the second time domain resource is an overlapping part of the third time domain resource and the fourth time domain resource; or
if the reference subband is configured in radio resource control RRC to receive or send the first signal on a third time domain resource, and the first subband is configured via RRC to receive or send the second signal on a fourth time domain resource, skip receiving or sending the second signal on the third time domain resource by using the first subband, wherein the second time domain resource is an overlapping part of the third time domain resource and the fourth time domain resource.

18. The communication apparatus according to any one of claims 12 to 14, wherein the communication module is further configured to:
send a physical random access channel PRACH signal on a first time-frequency resource, wherein the first time-frequency resource is a time-frequency resource in which one or more valid PRACH occasions are located, a frequency domain resource corresponding to the first time-frequency resource overlaps the at least two subbands in the first frequency domain resource, and symbol types corresponding to some or all of the at least two subbands on at least one symbol in a fifth time domain resource are downlink, and the fifth time domain resource comprises a symbol occupied by the first time-frequency resource and $N_{gap}$ symbols before the first time-frequency resource, wherein $N_{gap}$ is an integer greater than or equal to 0.

19. The communication apparatus according to any one of claims 12 to 14, wherein the communication module is further configured to:
receive a synchronization signal block SSB or a type-0 physical downlink control channel PDCCH signal on a first time-frequency resource, wherein a frequency domain resource corresponding to the first time-frequency resource overlaps the at least two subbands in the first frequency domain resource, symbol types corresponding to some or all of the at least two subbands on at least one symbol in a fifth time domain resource are uplink symbols, and the fifth time domain resource comprises a symbol occupied by the first time-frequency resource.

20. A communication apparatus, comprising:

a processing module, configured to generate first information, wherein the first information is used to determine a symbol type corresponding to at least one of M subbands on a symbol in a first time domain resource, the M subbands are located in a first frequency domain resource, M is a positive integer, and at least two subbands in the first frequency domain resource correspond to different symbol types on a same symbol in the first time domain resource; and
a communication module, configured to send the first information.

21. The communication apparatus according to claim 20, wherein the first frequency domain resource is a frequency domain resource occupied by one carrier.

22. The communication apparatus according to claim 20 or 21, wherein

the first information comprises N indexes, one of the N indexes indicates a slot format corresponding to one of the M subbands in at least one slot in the first time domain resource, the slot format indicates a symbol type of each symbol in one slot, and N is a positive integer less than or equal to M; or

the first information comprises one index, the index indicates N groups of slot formats, one of the N groups of slot formats is used to determine a slot format corresponding to one of the M subbands in at least one slot in the first time domain resource, the slot format indicates a symbol type of each symbol in one slot, and N is a positive integer less than or equal to M.

23. A communication apparatus, comprising:
a processor, wherein the processor is coupled to a memory, and the processor is configured to perform the method according to any one of claims 1 to 8.

24. A communication apparatus, comprising:
a processor, wherein the processor is coupled to a memory, and the processor is configured to perform the method according to any one of claims 9 to 11.

25. A communication system, comprising the communication apparatus according to claim 12 or 23 and the communication apparatus according to claim 20 or 24.

26. A computer-readable storage medium, wherein the computer-readable storage medium stores instructions, and when the instructions are run on a computer, the computer is enabled to perform the method according to any one of claims 1 to 8 or the method according to any one of claims 9 to 11.

27. A computer program product, comprising instructions, wherein when the instructions are run on a computer, the computer is enabled to perform the method according to any one of claims 1 to 8 or the method according to any one of claims 9 to 11.

FIG. 1

Quantity of
downlink symbols

Quantity of downlink slots

Quantity of
uplink slots

| D | D | D | D | F | U | U |

Pattern 1 (pattern1)    Quantity of uplink symbols

Single periodicity

Time domain

FIG. 2A

FIG. 2B

Cell-level TDD configuration and/or terminal device-level TDD configuration

| Slot #0 | Slot #1 | Slot #2 | Slot #3 | Slot #4 |
|---------|---------|---------|---------|---------|
| D | F | F | F | F |

Format index corresponding to an SFI index

| 0 | 0 | 0 | 32 | 0 |
|---|---|---|-----|---|

| D | D | D | 10:2:2 | U |
|---|---|---|--------|---|

FIG. 2C

Frequency domain

One CC

| DL | UL |
|----|----|

Time domain

FIG. 3

| Access network device | | Terminal device |
|-----------------------|---|------------------|

S401: Terminal device capability query signaling

S402: Capability of the terminal device

(a subband-level symbol type configuration can be identified)

S403: First information

(a subband-level symbol type configuration on a first frequency domain resource)

S404: Send a signal and/or receive a signal through the first frequency domain resource

FIG. 4

Frequency
domain

3rd subband
RB #85 to
RB #129

Guard interval 2: RB #80 to RB #84

2nd
subband
RB #50 to
RB #79

Guard interval 1: RB #45 to RB #49

1st subband
RB #0 to
RB #44

Time
domain

FIG. 5A

Frequency
domain

3rd
subband
RB #75 to
RB #119

2nd
subband
RB #45 to
RB #74

1st subband
RB #0 to
RB #44

Time
domain

FIG. 5B

**Subband 3:** #0 | #1 | #2 | #3 | #4 | #5 | #6 | #7

**Subband 2:** #0 | #1

**Subband 1:** #0 | #1 | #2 | #3

| Slot format | 0 | 0 | 5 | 0 | 0 | 0 | 0 | 12 | 1 | 1 | 0 | 12 | 1 | 1 |
|---|---|---|---|---|---|---|---|---|---|---|---|---|---|---|
| Configured slot | Subband 1 Slot #0 | Subband 1 Slot #1 | Subband 2 Slot #0 | Subband 3 Slot #0 | Subband 3 Slot #1 | Subband 3 Slot #2 | Subband 3 Slot #3 | Subband 1 Slot #2 | Subband 1 Slot #3 | Subband 2 Slot #1 | Subband 3 Slot #4 | Subband 3 Slot #5 | Subband 3 Slot #6 | Subband 3 Slot #7 |

FIG. 6A

EP 4 422 314 A1

EP 4 422 314 A1

| Subband 3 | #0 | #1 | #2 | #3 | #4 | #5 | #6 | #7 |
| --- | --- | --- | --- | --- | --- | --- | --- | --- |

| Subband 2 | #0 | #1 |
| --- | --- | --- |

| Subband 1 | #0 | #1 | #2 | #3 |
| --- | --- | --- | --- | --- |

| Slot format | 0 | 0 | 5 | 0 | 0 | 0 | 0 | 12 | 1 | 1 | 0 | 12 | 1 | 1 |
| --- | --- | --- | --- | --- | --- | --- | --- | --- | --- | --- | --- | --- | --- | --- |
| Configured slot | Subband 1 Slot #0 | Subband 1 Slot #1 | Subband 1 Slot #2 | Subband 1 Slot #3 | Subband 2 Slot #0 | Subband 2 Slot #1 | Subband 3 Slot #0 | Subband 3 Slot #1 | Subband 3 Slot #2 | Subband 3 Slot #3 | Subband 3 Slot #4 | Subband 3 Slot #5 | Subband 3 Slot #6 | Subband 3 Slot #7 |

FIG. 6B

FIG. 7

FIG. 8A

FIG. 8B

FIG. 8C

FIG. 8D

FIG. 8E

FIG. 9A

Frequency
domain

3rd subband — D

2nd subband — U — PRACH signal

1st subband — D

Fifth time domain resource

Time
domain

FIG. 9B

Frequency
domain

3rd subband — D

2nd subband — U

1st subband — SSB — D

First time domain resource

Time
domain

FIG. 9C

FIG. 10

FIG. 11

1200

Communication apparatus

1230

Communication interface

1210

Processor

1240

1220

Memory

FIG. 12

## INTERNATIONAL SEARCH REPORT

International application No.

**PCT/CN2022/127463**

### A. CLASSIFICATION OF SUBJECT MATTER

H04W 72/04(2009.01)i; H04W 72/12(2009.01)i; H04L 5/00(2006.01)i; H04L 5/14(2006.01)i

According to International Patent Classification (IPC) or to both national classification and IPC

### B. FIELDS SEARCHED

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNTXT; VEN; VCN; ENTXT; 3GPP; CNKI: 时隙格式指示, 频域格式指示, 载波, 子带, 子载波, 载频, 子载频, 符号, 类型, 方向, 不同, 不相同, 不一致, 相反, SFI, FFI, carrier, subband, subcarrier, symbol, direction, different, difference

### C. DOCUMENTS CONSIDERED TO BE RELEVANT

| Category* | Citation of document, with indication, where appropriate, of the relevant passages | Relevant to claim No. |
|---|---|---|
| PX | CN 115175336 A (VIVO COMMUNICATION TECHNOLOGY CO., LTD.) 11 October 2022 (2022-10-11) description, paragraphs [0096]-[0247] and [0316]-[0738] | 1-3, 9-14, 20-27 |
| PX | US 2022007395 A1 (QUALCOMM INC.) 06 January 2022 (2022-01-06) description, paragraphs [0105]-[0265] | 1-3, 9-14, 20-27 |
| X | CN 109474381 A (HUAWEI TECHNOLOGIES CO., LTD.) 15 March 2019 (2019-03-15) description, paragraphs [0005]-[0126] | 1-3, 9-14, 20-27 |
| X | CN 113328836 A (BEIJING SAMSUNG COMMUNICATION TECHNOLOGY RESEARCH CO., LTD. et al.) 31 August 2021 (2021-08-31) description, paragraphs [0013]-[0165] | 1-3, 9-14, 20-27 |
| A | WO 2021033119 A1 (TELEFONAKTIEBOLAGET LM ERICSSON (PUBL)) 25 February 2021 (2021-02-25) entire document | 1-27 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 November 2022** | **15 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/127463**

| Patent document cited in search report | | | Publication date (day/month/year) | Patent family member(s) | | | Publication date (day/month/year) |
|---|---|---|---|---|---|---|---|
| CN | 115175336 | A | 11 October 2022 | None | | | |
| US | 2022007395 | A1 | 06 January 2022 | WO | 2022006342 | A1 | 06 January 2022 |
| CN | 109474381 | A | 15 March 2019 | US | 2020275439 | A1 | 27 August 2020 |
| | | | | WO | 2019047553 | A1 | 14 March 2019 |
| | | | | EP | 3657871 | A1 | 27 May 2020 |
| CN | 113328836 | A | 31 August 2021 | None | | | |
| WO | 2021033119 | A1 | 25 February 2021 | US | 2022295560 | A1 | 15 September 2022 |
| | | | | CO | 2022002915 | A2 | 31 May 2022 |
| | | | | EP | 4014410 | A1 | 22 June 2022 |

Form PCT/ISA/210 (patent family annex) (January 2015)

**REFERENCES CITED IN THE DESCRIPTION**

**Patent documents cited in the description**

- CN 202111278290